# FASCICULE DE BREVET EUROPEEN

(11) **EP 1 716 520 B1**
(45) Date de publication et mention de la délivrance du brevet: **20.04.2016**
(21) Numéro de dépôt: 05717570.5
(22) Date de dépôt: 07.02.2005
(51) Int. Cl.: G06K 19/073

(54) **UTILISATION D'UNE SIGNATURE NUMERIQUE OBTENUE A PARTIR D'AU MOINS UNE CARACTERISTIQUE STRUCTURELLE D'UN ELEMENT MATERIEL POUR PROTEGER DE LA LECTURE DIRECTE DES INFORMATIONS SENSIBLES ET PROCEDE DE LECTURE DE CES INFORMATIONS PROTEGEES**
VERWENDUNG EINER DIGITALEN SIGNATUR, DIE AUS MINDESTENS EINER STRUKTURELLEN KENNGRÖSSE EINES HARDWAREELEMENTS ERHALTEN WIRD, UM DAS DIREKTE LESEN SENSITIVER INFORMATIONEN ZU SCHÜTZEN, UND VERFAHREN ZUM LESEN GESCHÜTZTER SENSITIVER INFORMATIONEN
USE OF A DIGITAL SIGNATURE OBTAINED FROM AT LEAST ONE STRUCTURAL CHARACTERISTIC OF A HARDWARE ELEMENT IN ORDER TO PROTECT DIRECT READING OF SENSITIVE INFORMATION AND METHOD FOR READING PROTECTED SENSITIVE INFORMATION

(30) Priorité: 06.02.2004 FR 0401171
(43) Date de publication de la demande: 02.11.2006
(73) Titulaire: ARJO SOLUTIONS, 92300 Levallois-Perret (FR)
(72) Inventeur: Boutant, Yann, 73100 Aix-les-Bains (FR); Labelle, David, 69510 Soucieu en Jarrest (FR); Seux, Hervé, Lexington, MA 02420 (US)
(74) Mandataire: Sarlin, Laure V.
(86) Numéro de dépôt international: PCT/FR2005/000267
(87) Numéro de publication internationale: WO 2005/078651

(56) Documents cités:
- EP-A- 1 139 302
- EP-A2- 0 806 748
- EP-A2- 1 202 225
- US-A- 4 738 473
- US-A- 5 354 097
- US-A- 5 974 150
- US-A1- 2001 046 294
- US-A1- 2005 093 678
- US-B1- 6 357 656
- US-B1- 6 588 672

## Description

La présente invention concerne le domaine technique de la protection et de la sécurisation d'informations. En particulier, l'invention a pour objet l'utilisation d'une ou plusieurs signatures numériques d'un élément matériel de structure complexe, chaotique, unique et stable, pour protéger de la lecture directe des informations sensibles, un support porteur de telles informations protégées et un procédé de lecture de ces informations protégées.

L'avènement de l'ère numérique a apporté des nouvelles possibilités de développement aux organisations et aux individus. Si le monde numérique a permis l'accès beaucoup plus rapide, facile et pertinent à l'information et à la communication sous toutes ses formes, s'il a révolutionné les fonctions de stockage et transmission de l'information, on peut considérer aussi que, intrinsèquement, les plate-formes numériques, en général en réseaux, permettent la reproduction, l'envoi et la capture infinie des informations, et souvent de manière incontrôlable.

Le monde numérique se trouve ainsi intrinsèquement inadapté à remplir des fonctions d'authentification, de protection/sécurisation d'informations (confidentialité), de suivi de l'information (traçabilité et intégrité), ...

Le document EP 1 202 225 A2 divulgue une méthode pour authentifier un document.

Des pans entiers de technologie ont été développés afin de palier ces défauts originels (anti-virus, firewall, cryptographie, stéganographie, contrôle d'accès, ...). Les réponses s'appuient essentiellement sur des principes algorithmiques ou de programmation pour apporter ces nouvelles dimensions contre nature au monde numérique.

Dans ce contexte, la présente invention a pour objectif de fournir un nouveau procédé général de sécurisation d'informations sensibles, c'est-à-dire dont on souhaite protéger, contrôler l'accès direct ou vérifier l'intégrité, ainsi qu'un procédé de lecture des informations protégées obtenues, présentant un degré élevé de sûreté. Ce procédé présente l'avantage de ne pas, généralement, faire reposer sa sûreté sur des conjectures mathématiques et/ou algorithmiques. La présente invention concerne un procédé de lecture d'information sensibles protégées selon les caractéristiques de la revendication 1.

Ce procédé se doit d'être adapté à la protection de tout type d'informations, notamment graphiques, numériques, statiques, dynamiques, analogiques.

L'invention a également pour objectif de fournir un nouveau moyen de générer à l'infini des suites entièrement aléatoires.

Ce nouveau procédé se doit d'apporter des réponses nouvelles, complémentaires et très performantes dans des applications aussi variées que :
- la traçabilité de produits et activités avec un niveau de sécurité élevé,
- la gestion documentaire, dont horodatage (datation) et géolocalisation (GPS)
- les documents de sécurité, (fiduciaire, valeur numéraire, ID, médicaux, brevets, ...)
- la sécurisation des données et des échanges (communications),
- les étiquettes embarquées ou non,
- les emballages de toutes natures (dont intelligents et RFID)
- la confidentialité de document physique ou information numérique,
- le contrôle d'accès (à des lieux, des machines, des activités, de l'argent et des informations) et cartes multi-fonctions
- le vote électronique
- les jeux de hasard
- la lutte contre la contrefaçon de produits manufacturés ou d'oeuvres intellectuelles et artistiques
- la certification d'origine de document papier ou électronique (signature électronique),
- le paiement électronique (dont « e-ticketing » et affranchissement postal)
- la protection de clé(s) de cryptographie dans des protocoles classiques

La présente invention a également pour objet les procédés et utilisations tels que décrits dans les revendications.

La description ci-après, en référence aux figures annexées, permet de mieux comprendre l'objet de l'invention.

La **FIG. 1** représente un schéma général incluant un procédé de protection et un procédé de lecture conformes à l'invention.

La **FIG. 2** illustre des variantes d'obtention de signatures numériques à partir de différents éléments matériels.

Les **FIG. 3** et **4** illustrent un exemple de mise en oeuvre des procédés de protection et de lecture de l'invention et de support.

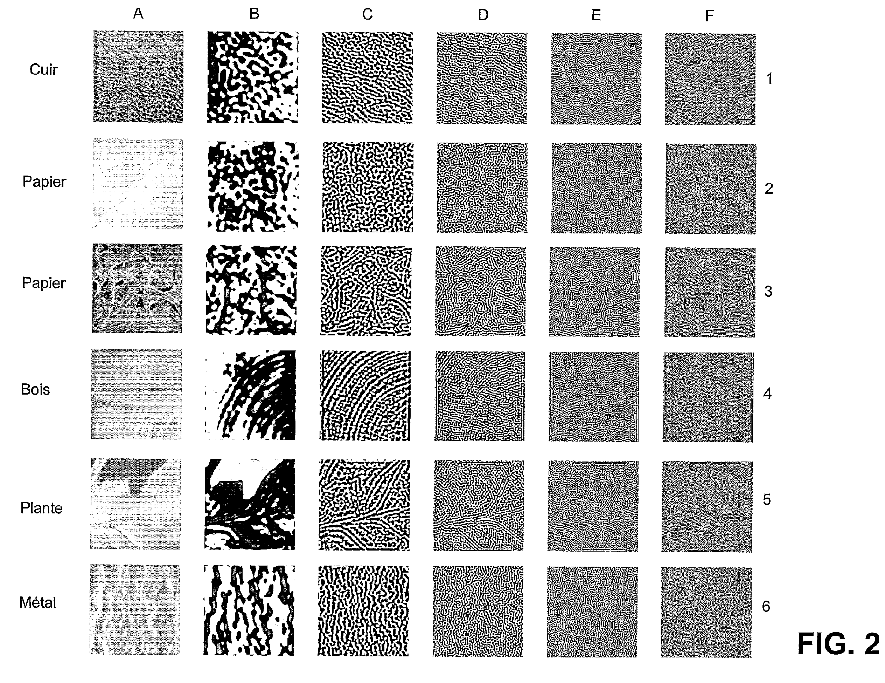

Les procédés et utilisations de l'invention utilisent des signatures numériques obtenues à partir d'au moins une caractéristique structurelle d'un élément matériel, sélectionné pour ses caractéristiques structurelles. Par conséquent, tous les procédés et utilisations conformes à l'invention comportent une étape d'obtention d'au moins une signature numérique à partir d'un élément matériel, plus précisément une étape de détection d'au moins une caractéristique structurelle de l'élément matériel, afin de générer au moins une signature numérique. L'élément matériel utilisé présente une structure complexe, chaotique, unique et stable. Selon sa signification classique, une « signature numérique » d'un élément matériel désigne une représentation, une caractérisation numérique qui est propre à l'élément matériel. Selon l'invention, une signature numérique est extraite de la structure de l'élément matériel, elle est obtenue à partir d'au moins une caractéristique de l'élément matériel rendant compte de sa structure. De façon avantageuse, la signature numérique présente un caractère aléatoire. Notamment, les signatures numériques peuvent se présenter sous la forme d'une image numérique de la structure de l'élément matériel, comme illustré FIG. 2.

La présente invention utilise le monde physique, analogique et matériel qui possède, sous de multiples formes, des éléments uniques, en général résultat d'un procédé de création chaotique et/ou stochastique. En effet, certains éléments matériels contiennent des caractéristiques largement chaotiques et présentent une extrême complexité structurelle intrinsèque, donnant une richesse informationnelle considérable à qui sait la lire.

En général, les éléments matériels sélectionnés pour mettre en oeuvre l'invention rassembleront des caractéristiques à la fois déterministes et à la fois aléatoires. Dans le cadre de l'invention, il est particulièrement avantageux d'en extraire au mieux la partie aléatoire. Ces éléments matériels, seront aussi en général non-copiables/non-reproductibles.

De plus, certains éléments matériels ont une quasi-invariance structurelle dans un temps donné, ce qui permet de les conserver et de les utiliser pendant ce temps. La présente invention utilise des éléments matériels dont la structure est à la fois complexe, unique, chaotique et quasi-invariante dans le temps. Conviennent, en particulier, au sens de l'invention, les matériaux fibreux, les plastiques, les métaux, les cuirs, les bois, les matériaux composites, le verre, les minéraux, les structures cristallines, qui peuvent avoir subi des modifications ou transformations. Ils peuvent, par exemple, être imprimés et/ou gravés et/ou perforés. Une combinaison de plusieurs matériaux peut aussi servir d'élément matériel au sens de l'invention. Les matériaux fibreux, à base de fibres synthétiques ou naturelles, et en particulier tout ou partie d'un papier, carton ou non-tissé sont préférés. L'invention fait donc, avantageusement appel à des matériaux manufacturés. On peut également envisager que l'élément matériel fasse partie d'un papier, carton ou non-tissé, sur lequel il est repéré par un matériau transparent au mode de détection utilisé pour extraire la ou les caractéristiques structurelles, stable dans le temps et assurant sa protection, par exemple, un revêtement plastique ou une résine.

L'élément matériel utilisé dans la présente invention peut être préexistant, ou fabriqué, et éventuellement modifié, uniquement pour être mis en oeuvre dans le procédé selon l'invention.

De façon préférée, on utilisera le papier comme élément matériel à l'origine de la ou des signature(s) numérique(s) utilisée(s) pour assurer la protection des informations sensibles, conformément à l'invention. En effet, le papier est un matériau poreux extrêmement complexe constitué essentiellement de fibres cellulosiques et de charges minérales. Il est anisotrope et hétérogène. Les fibres sont orientées et rassemblées en agrégats : flocs.

L'instabilité « naturelle » du procédé physico-chimique de fabrication, la variabilité intrinsèque de la matière première utilisée expliquent la forte composante chaotique de la structure du papier. La formation de la structure de ce matériau se réalise en figeant un flux de pâte à papier sur un tamis (une toile de fabrication). Son facteur de formation est appréciable à l'oeil nu en transvision en lumière naturelle : il est appelé « épair ». Le papier est généralement produit en bande continue et est mis en forme typiquement en feuille. Il peut être scruté de multiples façons et par exemple, des caractéristiques structurelles montrant son état de surface, sa porosité interne, son organisation volumique du réseau fibreux microscopique ou macroscopique (flocs) à différentes échelles, peuvent être détectées.

Le papier rassemble les propriétés génériques requises pour être utilisé comme élément matériel générateur de signatures numériques aléatoires, à savoir la haute complexité de sa structure, aspect chaotique (imprévisible) à différentes échelles, l'unicité de chaque endroit d'un papier, et sa quasi-invariance dans le temps (vieillissement très lent en particulier de sa structure, permettant de conserver des papiers des décennies, voire des siècles ...).

Toute la valeur de l'invention se révèle lorsque l'on utilise un élément matériel qui entre autres propriétés, possède celle de la quasi-invariance. C'est à dire que naturellement, il ne se modifie pas ou peu dans le temps, et que si on mesure certaines caractéristiques structurelles à un moment donné, on est capable de retrouver sinon intactes, très similaires ces mêmes caractéristiques à un autre moment ultérieur. Il peut donc être qualifié de stable. Cette stabilité peut être obtenue en protégeant l'élément matériel d'éventuelles agressions extérieures (rayures, perforations, détériorations optiques, ...). Cette protection peut se réaliser en insérant l'élément matériel de manière définitive dans une enveloppe externe, n'empêchant en rien l'accès aux caractéristiques intéressantes de l'élément matériel. Elle peut aussi être réalisée en conservant l'élément matériel loin de toute agression en atmosphère conditionnée et/ou physiquement protégé, c'est-à-dire en lieu sûr. Le type de protection à apporter à l'élément matériel est fonction de l'application choisie (appel fréquent à l'élément matériel ou non, sensibilité de l'application, ..).

Les signatures numériques d'un élément matériel tel que précédemment défini, sont obtenues comme suit. On sélectionne un élément physique au sens de l'invention et on en extrait une ou plusieurs caractéristiques de sa structure quasi-invariantes dans le temps. Avantageusement, ces caractéristiques rendent compte de sa structure chaotique, complexe, unique et stable. En d'autres termes, une ou des caractéristiques complexes et chaotiques de la structure unique de l'élément matériel sont extraites. Ces caractéristiques vont servir à générer, après numérisation conjointement, ou non, à d'autres traitements du type mise en forme/conditionnement et/ou codage, une signature numérique. Cette signature numérique, qui elle-même rend compte de la structure chaotique, complexe, unique et stable de l'élément matériel sélectionné, va, alors, être mise en oeuvre pour assurer la protection, la sécurisation, de tout type d'informations sensibles sous forme numérique, c'est à dire pour en empêcher la lecture directe. Il sera donc parfois nécessaire de numériser, au préalable, les informations sensibles à protéger, si elles ne sont pas déjà sous forme numérique. De façon classique, par numérique, on entend une représentation d'informations ou de grandeurs physiques sous forme de tout type de signaux (dont des images réelles ou complexes, des composantes amplitude et/ou phase) à valeurs discrètes, par exemple sous forme de chiffres (dans quelque base que ce soit : binaire, décimale, hexadécimale, ...) ou sous forme d'un ensemble quelconque de symboles (alphabet, grammaire prédéfinie, ...). Les systèmes numériques ont souvent recours aux convertisseurs analogique-numérique ou numérique-analogique.

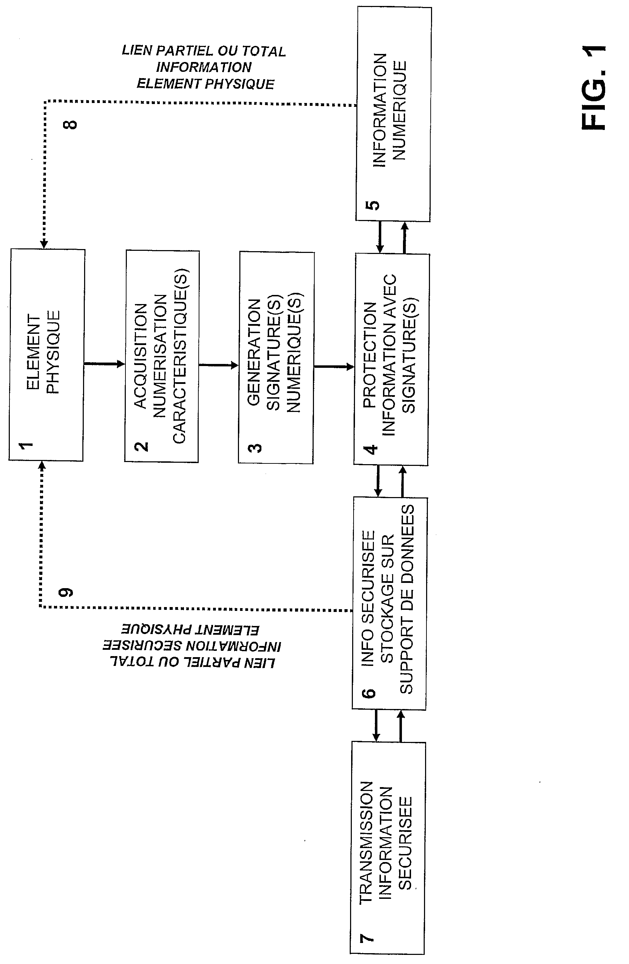

La **FIG.1** illustre de façon générale un procédé de protection et un procédé de lecture selon l'invention. Le procédé de protection comprend les étapes suivantes :
1. Un élément physique au sens de l'invention est sélectionné.
2. L'acquisition et la mise en forme/conditionnement voire la numérisation d'une ou plusieurs caractéristiques de l'élément matériel est réalisée grâce à un ou plusieurs capteurs avec ou sans contact avec l'élément matériel. Ces capteurs sont classiquement suivis d'une unité de traitement analogique (optique ou électronique par exemple) ou numérique (carte d'acquisition branchée à une plate-forme quelconque informatique ou automatique).
3. Une ou plusieurs signature(s) numérique(s) sont générées à partir des caractéristiques extraites et mises en forme / conditionnées à l'étape 2. Un codage (sous forme analogique et/ou numérique) peut être réalisé suivie ou précédée par une numérisation si les caractéristiques extraites à l'étape 2 ne sont pas déjà sous forme numérique, la nature de ces traitements peut varier en fonction du type d'élément matériel choisi et de l'application pour laquelle le procédé est mis en oeuvre.
4. La ou les signatures numériques sont associées, de manière directe (par des opérations mathématiques élémentaires) ou indirecte (en utilisant des algorithmes sophistiqués de cryptage et/ou de stéganographie par exemple), avec des informations numériques sensibles, afin d'en assurer leur protection.

L'invention, met en oeuvre, pour la protection d'information sous forme numérique, un traitement numérique utilisant au moins une signature numérique issue d'un élément matériel, ce qui permet de rendre les informations sensibles originales non directement accessibles, lisibles, audibles ... En d'autres termes, on comprend que les informations sensibles sont sécurisées, leur lecture ou compréhension nécessitant de mettre en oeuvre un procédé de lecture ultérieur qui constitue un autre des aspects de l'invention.

De façon optionnelle, les informations sensibles en tout ou partie peuvent être liées physiquement à l'élément matériel ayant été mis en oeuvre à l'étape 1 : elles peuvent, par exemple, être imprimées sur un document dont est issu l'élément matériel.

Les informations sécurisées à l'étape 4, sont stockées (étape 6) sur un support de données (numérique, optique, magnétique, électronique, papier, notamment, par gravure, impression, enregistrement...). Le stockage peut être un enregistrement temporaire ou permanent. L'élément matériel ayant été mis en oeuvre à l'étape 1, peut constituer une partie de ce support. Par ailleurs, selon l'étape 7, tout ou partie des informations protégées à l'étape 4 peut être transmis, par l'intermédiaire d'un réseau de télécommunications (à fibres optiques, à ondes radio, téléphonique, satellitaire,...) ou d'un transport sous forme matérielle. Les informations sensibles étant protégées grâce à la, ou aux signatures numériques extraites de l'élément matériel, elles ne peuvent pas être accessibles ultérieurement à qui ne possède pas l'élément matériel initial et les algorithmes de codage pour générer les signatures numériques et/ou lesdites signatures numériques et les algorithmes de mise en oeuvre de celles-ci. Les informations sensibles, une fois protégées, sont au moins partiellement illisibles. Le procédé de lecture sera détaillé par la suite.

Il existe différents moyens d'obtenir une signature numérique d'un élément matériel. Les signatures numériques les plus adaptées aux procédés et utilisations de l'invention présentent un caractère complexe et aléatoire qui reflète la structure du matériau dont elles sont extraites. Cette signature est, avantageusement, obtenue par détection, à l'aide d'un ou plusieurs capteurs, d'une ou plusieurs caractéristiques structurelles quasi-invariantes dans le temps de cet élément rendant compte de sa structure complexe, chaotique, unique et stable, suivie éventuellement d'une mise en forme/d'un conditionnement, d'une numérisation, d'un codage selon un ou plusieurs algorithmes de cette ou ces caractéristiques structurelles. Par algorithme, on entend un enchaînement déterminé de règles opératoires ou d'étapes de traitements élémentaires pour obtenir un résultat à partir de données ou de signaux- initiaux, tels que des algorithmes informatiques (sens numérique du terme) (par exemple) ou des opérations élémentaires électroniques ou optiques (sens analogique du terme).

Par ailleurs, l'acquisition de la caractéristique structurelle peut être réalisée sous forme analogique ou numérique. Si l'acquisition est réalisée sous forme analogique, on peut soit numériser puis coder sous forme numérique pour obtenir la signature numérique, soit coder sous forme analogique puis numériser, pour obtenir la signature numérique. La numérisation peut donc intervenir au plus tôt, dans l'étape 2 de la **FIG.1** ou bien être la dernière opération réalisée dans l'étape 3 de la **FIG.1****.** On peut donc, par exemple utiliser les enchaînements suivants :
a- Capteur / Unité de traitement numérique (carte d'acquisition branchée à plate-forme informatique)/ Codeur Numérique
b- Capteur / Unité de traitement analogique (Conditionnement du signal)/ Convertisseur Analogique-Numérique / Codeur Numérique
c- Capteur / Unité de traitement analogique (mise en forme/conditionnement du signal et Codage)/ convertisseur Analogique-Numérique

Il est également possible d'utiliser, dans les étapes 2 et/ou 3, des convertisseurs Analogique/Numérique ou Numérique/Analogique, afin de réaliser certains traitements particuliers sans sortir du cadre de l'invention, l'important à la fin de l'étape 3 étant d'obtenir des signatures numériques.

Par ailleurs, de façon avantageuse, la caractéristique structurelle, et donc la signature numérique, rendent compte de la structure interne de l'élément matériel, de sorte que la caractéristique structurelle est mesurée sur un volume du support et à l'intérieur de celui-ci.

La détection peut se faire selon des méthodes sans contact (optiques et/ou électromagnétiques notamment), dans lesquelles on utilise l'interaction (réflexion et/ou absorption et/ou transmission et/ou diffusion et/ou réfraction et/ou diffraction et/ou interférence) d'une onde ou rayonnement électromagnétique avec l'élément matériel, et en utilisant un capteur optique/électronique pour réaliser l'acquisition, voire la numérisation. Le ou les capteurs mis en oeuvre peuvent alors être placés dans toute position par rapport à l'élément matériel observé, et par rapport à la, ou aux sources de rayonnement. Typiquement, les rayonnements utilisés peuvent être la lumière visible et/ou infrarouge (IR) et/ou ultraviolet (UV) et/ou laser ou rayons bêta et/ou gamma et/ou X. Le choix du ou des rayonnements et du ou des capteurs utilisés peut être influencé par l'application du procédé, le type d'élément matériel sélectionné, l'échelle de mesure choisie, le coût de la mise en oeuvre ... Le ou les capteurs utilisés peuvent être fixes par rapport à la source et/ou à l'élément matériel, ou en mouvement relatif. Il est également possible de mesurer l'interaction entre l'onde et le matériau selon plusieurs orientations.

De façon avantageuse, les procédés et utilisations selon l'invention mettent en oeuvre la signature numérique d'un élément matériel, partie d'un papier, carton ou non-tissé, obtenue après détection de son interaction avec la lumière visible, par transvision, notamment en utilisant un capteur CCD ou CMOS.

La détection peut également être réalisée selon des méthodes avec contact entre l'élément matériel et le, ou les capteurs de mesure. Un palpeur est, par exemple, utilisé comme capteur. Ce palpeur peut ou non intégrer, en plus de la dimension mécanique (suivi de la rugosité de surface), des dimensions électromagnétiques (comportement magnétique) ou autres. Dans ce cas, un mouvement relatif du palpeur et de l'élément matériel est nécessaire.

Un autre exemple de capteur avec contact consiste à utiliser l'élément matériel comme support d'une onde ultrasonique, par exemple, ou toute autre sollicitation appliquée (électrique, thermique, chimique, biologique, ...). On enregistre alors, dans différentes orientations, le comportement/la réponse de l'élément matériel soumis à cette onde ou sollicitation.

L'extraction de caractéristiques structurelles de l'élément matériel peut aussi se faire à une ou plusieurs échelles, du niveau microscopique au niveau macroscopique, déterminant alors la complexité de la caractéristique structurelle mesurée. La complexité de la caractéristique détermine celle de la signature numérique, choisie dans le cas d'une protection par combinaison directe, en fonction de la taille des informations sensibles à protéger. Si l'on reprend l'exemple d'un élément matériel de type papier, on peut scruter sa structure obtenue par transvision, ou la rugosité de sa surface, et ce au niveau des fibres (éléments de 100 µm à quelques mm de longueur et environ 10 à 20 µm de largeur), ou au niveau des agrégats de fibres (typiquement de l'ordre de 1 à 10 mm).

La surface d'un métal peut être, elle aussi, parfaitement lisse à l'oeil et devenir très rugueuse donc intéressante comme élément matériel dans le cadre de cette invention quand elle est observée à l'échelle micrométrique ou sub-micrométrique.

Le bois est un autre exemple, puisque l'on peut suivre les nervures du matériau à l'oeil nu, mais la structure intime de ce matériau n'est accessible qu'à partir d'une échelle de 50 à 100 µm. La **FIG.2** illustre des signatures numériques pouvant être obtenues à partir de ces différents matériaux, en fonction des filtres appliqués.

La détection, sur l'élément matériel, d'une caractéristique structurelle rendant compte de sa structure complexe unique, peut être réalisée en scrutant l'élément selon une ligne (1D), selon une surface (2D), ou selon un volume (3D Stéréoscopie), de sorte qu'après numérisation, la caractéristique structurelle est sous forme 1D, 2D ou 3D. De façon avantageuse, la(es) signature(s) numérique(s) utilisée(s) rend(ent) compte de la structure interne du matériau fibreux et seront donc obtenues par observation des caractéristiques internes et éventuellement de surface sur un volume de ce dernier. La détection peut également se faire indépendamment du temps ou « en temps réel ». Dans ce dernier cas, la caractéristique structurelle est échantillonnée dans le temps.

De même, on peut ajouter des dimensions à cette phase de détection, en observant l'élément matériel sous différentes orientations ou illuminations, en couleur, niveaux de gris, sous forme binaire... L'image considérée peut aussi être une image discrète ou non, réelle ou complexe (amplitude et phase) au sens du traitement et de l'analyse d'image.

La ou les signatures numériques mises en oeuvre dans le procédé de l'invention correspondent à une telle caractéristique structurelle numérisée, soumise éventuellement à un codage (avant ou après numérisation) selon un ou plusieurs algorithmes. Aussi, une telle signature numérique se présente, par exemple, sous une forme binaire, sous la forme d'une ou plusieurs images en couleur ou en niveaux de gris, d'une ou plusieurs images discrètes, réelles ou complexes (amplitude et phase).

Il est bien clair que toute la valeur de l'invention se révèle en utilisant une ou des signatures numériques qui conservent un caractère aléatoire et complexe caractéristique de la structure unique et stable du matériau, malgré le traitement appliqué aux caractéristiques structurelles utilisées pour générer la signature numérique.

Pour générer à partir des caractéristiques une ou plusieurs signatures numériques, de nombreuses méthodes sont, elles aussi, envisageables, et il n'est pas raisonnable de vouloir toutes les citer. Les techniques données ci-après ne constituent donc nullement une liste exhaustive.

Les méthodes connues en traitement et analyse du signal ou de l'image, de l'électronique ou de l'optique sont bien naturellement directement mobilisables. Les traitements utilisés alors s'appuient, sous forme analogique ou numérique, sur des filtres spatiaux et/ou fréquentiels (passe-haut, passe-bas, passe-bande,...), et/ou la transformée de Fourier, et/ou les transformées dites par ondelettes, et/ou des descripteurs, et plus généralement, tout type d'algorithme permettant d'analyser, et/ou de transformer et/ou de réorganiser et/ou de classer et/ou de seuiller les données brutes (dont des signaux et des images) extraites de la ou des caractéristiques structurelles. Les opérations de convolution/déconvolution, ainsi que les opérations logiques et arithmétiques entre images et/ou signaux peuvent être mises en oeuvre pour l'obtention desdites signatures. A titre illustratif, la transformée de Fourier d'un signal-image pourra être mise en oeuvre, soit au moyen d'un algorithme de transformée de Fourier rapide (« FFT ») si le signal est de nature discrète, soit au moyen d'une lentille de Fourier si le signal est de nature optique.

On peut aussi appliquer à la ou aux caractéristiques structurelles extraites de l'élément matériel des algorithmes plus élaborés, tels ceux évoqués ci-dessus de telle façon que la ou les signatures numériques finales se présentent sous la forme d'un signal, d'une image, ou de tout type de fichier qu'il est possible de coder sous forme alphanumérique ou numérique en base décimale, binaire, octale, hexadécimale, ou autre.

La phase de protection peut mettre en oeuvre une ou plusieurs signatures numériques issues d'un même élément matériel ou de plusieurs éléments matériels.

La phase de protection des informations sensibles sous forme numérique, au moyen de la ou des signatures numériques ainsi générées, peut être réalisée, comme expliqué précédemment, de manière directe par des opérations mathématiques élémentaires, ou indirecte en ayant recours à des algorithmes élaborés existants, par exemple de cryptographie et/ou stéganographie, avec ou sans compression de données au préalable.

Dans la voie directe, la protection des informations sensibles sous forme numérique est réalisée par combinaison avec au moins une signature numérique d'un élément matériel, rendant au moins partiellement illisibles, à la fois les informations sensibles sous forme numérique et la signature numérique.

A titre d'exemple, on peut citer la combinaison d'une signature numérique se présentant sous forme binaire (suite de « 0 » et de « 1 » image de la structure chaotique de l'élément matériel), avec les informations sensibles sous forme numérique codées elles aussi sous forme binaire, en effectuant une opération logique (XOR (addition modulo 2) par exemple) entre les deux suites binaires bit à bit. Les deux suites binaires étant idéalement de même taille. La signature numérique et les informations numériques à protéger peuvent également être combinées en sommant, octet par octet, les deux chaînes numériques. Ici encore, une multitude de combinaisons sont possibles en restant dans le cadre de l'invention. La combinaison peut être réalisée, à partir de la forme binaire, hexadécimale, ASCII ou alphabétique, des informations sensibles sous forme numérique et de la ou des signatures numériques de l'élément matériel, par application conjointement ou non des principes de permutation, transposition, substitution, itération, masque (opérateurs logiques dont XOR, addition, soustraction, bit à bit (en chaîne), ou bloc à bloc ...) ou propriétés mathématiques d'algèbre modulaire (modulo n), de théorie des nombres.

Une forme plus élaborée de combinaison utilise le principe de masque jetable (« One Time Pad »). La signature numérique utilisée est une suite parfaitement aléatoire, de la même taille que les informations sensibles sous forme numérique (en nombre de bits, par exemple) et ne sert de masque qu'une seule fois. Par extension, on peut aussi envisager d'utiliser une signature numérique de taille supérieure ou égale à celle des informations sensibles. Il est à noter, de plus, qu'il est possible de combiner tout type d'information sensible, quelque soit sa taille, étant donné la réserve quasi-inépuisable que constituent les éléments matériels éligibles.

La protection de seulement une partie des informations sensibles est tout à fait envisageable, il suffit de sélectionner, au sein des informations numériques, les zones à combiner avec la signature numérique.

La voie indirecte de sécurisation de l'information numérique met en oeuvre la ou les signatures numériques de l'élément matériel et des algorithmes de cryptographie (à clé privée et/ou à clé publique) et/ou stéganographie. Les signatures numériques jouent le rôle de clés de cryptage, de stéganographie, mot de passe, phrase de passe, fichier de passe, graine aléatoire, clés de codage aléatoires, ou peuvent simplement être mises en oeuvre comme « enveloppe numérique» d'une information numérique comprimée, cryptée et/ou stéganographiée. On a alors un procédé de protection plus complexe : les informations sensibles peuvent être protégées selon des méthodes connues (combinaison, algorithme de cryptographie), puis soumises au procédé de protection selon l'invention ou inversement. Lorsque la protection selon l'invention intervient en étape finale, on peut considérer que la signature numérique joue le rôle d'enveloppe numérique.

Si les applications à clé(s) secrète(s) sont naturellement exploitables avec le procédé de la présente invention, on peut dans une version plus élaborée de l'invention utiliser des protocoles existants de clés asymétriques (publique/privée) en utilisant une ou des signatures numériques extraites de l'élément matériel comme clés de cryptographie. A titre d'exemple, on peut extraire de l'élément matériel deux grands nombres premiers (tirage intrinsèquement aléatoire mais figé dans l'élément matériel donc reproductible pour qui possède la clé physique) qui serviront à mettre en oeuvre un procédé de type RSA (Rivest-Shamir-Adleman), ou utiliser par exemple un tirage aléatoire extrait de l'élément matériel dans un protocole cryptographique quelconque. On peut aussi plus généralement à partir d'un élément matériel pertinent au sens de l'invention extraire une clé publique et une clé privée, la clé publique étant par exemple transmise à un destinataire, la clé privée restant par exemple sous forme physique dans l'élément matériel, et étant appelée uniquement temporairement quand il faut déchiffrer un message chiffré avec la clé publique. On peut aussi extraire une clé (privée par exemple) d'un élément matériel pertinent au sens de l'invention et utiliser une autre clé (publique par exemple) générée par tout autre moyen. D'autres adaptations de l'invention à des procédés ou protocoles cryptographiques existants sont naturellement envisageables. En particulier on peut ainsi aisément assurer les fonctions d'authentification, de certification, d'identification, de non-répudiation, de confidentialité, de contrôle d'intégrité, de preuve à divulgation nulle, de signature, d'échange de clés, de datation, de génération, dépôt et gestion de clés, etc... aujourd'hui couvertes par des lesdits protocoles existants.

Que l'on utilise la voie directe, ou indirecte de protection décrite ci-dessus, on peut soumettre en amont, c'est à dire avant la mise en oeuvre de la combinaison ou de l'algorithme de cryptage et/ou stéganographie, la signature et les informations numériques à un algorithme de compression des données, ou à tout autre traitement.

La protection par voie directe et la protection par voie indirecte permettent toutes deux, si besoin, de ne protéger qu'une partie des informations sensibles, et de mettre en place plusieurs niveaux d'accès aux informations sensibles originales. Il apparaît aussi intéressant que la protection mette en oeuvre plusieurs signatures numériques issues d'un même ou de différents éléments matériels, permettant ultérieurement de donner des accès de lecture distincts aux informations sensibles, et notamment qu'à certaines parties seulement de ces informations sensibles. L'utilisation de plusieurs signatures numériques successivement et/ou de manière séquentielle permet une sécurisation de l'information numérique à multiples niveaux d'accès. Les signatures numériques sont ensuite générées dans la phase de lecture ultérieure, en fonction du niveau d'autorisation d'accès de l'opérateur.

Un dispositif adapté pour la mise en oeuvre de la protection d'informations sensibles, utilisable dans le cadre de l'invention, comprend des moyens pour repérer un élément matériel sélectionné et détecter sur ce dernier, une ou plusieurs de ses caractéristiques structurelles, en particulier rendant compte de sa structure complexe, chaotique, unique et stable, reliés à une unité de stockage et de traitement assurant :
a1) l'acquisition, la mise en forme/le conditionnement, la numérisation et éventuellement le codage selon un ou plusieurs algorithmes de la ou des caractéristiques structurelles détectées pour générer une (ou des) signature(s) numérique(s), qui rendent avantageusement compte du caractère complexe, chaotique, unique et stable de la structure de l'élément matériel,
b1) l'association de la (ou des) signature(s) numérique(s) générée(s) à des informations sensibles sous forme numérique pour en assurer leur protection, générant ainsi des informations sensibles protégées.

Un capteur optique sera, de préférence, utilisé pour la détection. Le dispositif peut être relié à des moyens de transmission à distance des informations sensibles protégées (même sur un canal non sûr tel qu'Internet) et/ou de la signature numérique et/ou des caractéristiques structurelles.

Un aspect important de la présente invention est qu'elle est applicable, tant à des informations de taille définie et invariable dans le temps, qu'à des informations « temps-réel » de type signal numérique variant dans le temps. Si le premier mode d'application est facilement perceptible, puisque l'on combine un morceau délimité et invariable d'informations (signature numérique) issue d'un élément matériel avec un morceau d'informations numériques à protéger, lui aussi délimité et invariant, le second mode d'application mérite plus de précisions.

Dans le cas, où le procédé selon l'invention est mis en oeuvre pour protéger des informations sensibles dynamiques, telles qu'une séquence sonore et/ou vidéo, il est nécessaire d'utiliser une signature numérique « dynamique ». La signature numérique « dynamique » peut être obtenue par répétition d'une signature numérique statique ou par détection répétée, à l'aide d'un ou plusieurs capteurs, d'une ou plusieurs caractéristiques structurelles d'un élément matériel statique rendant compte de sa structure complexe unique.

Une autre variante consiste à obtenir une signature numérique « dynamique » par détection en continu, à l'aide d'un ou plusieurs capteurs, d'une ou plusieurs caractéristiques structurelles d'un élément matériel en mouvement relatif par rapport au(x) capteur(s). L'élément matériel « défile » devant le ou les capteurs, de manière synchrone ou non avec le signal numérique à sécuriser. Le déplacement relatif de l'élément matériel et du ou des capteurs peut aussi être obtenu avec le mouvement seul du ou des capteurs ou le mouvement combiné de(s) capteur(s) et de l'élément matériel, dans des directions et/ou à des vitesses différentes. Dans cette dernière variante, l'élément matériel est, par exemple, une bobine de papier, carton ou non-tissé, en défilement, ou du papier en cours de fabrication sur machine à papier. Il est même envisageable de combiner instantanément, le signal numérique à protéger avec les signatures « dynamiques » obtenues.

Dans tout procédé de protection/sécurisation d'informations, il faut ensuite être capable de lire les informations qui ont été protégées. Le terme « lire » est à interpréter au sens large, il inclut tout type de décodage, décryptage ..., rendant les informations sensibles originales, au moins en partie, accessibles, compréhensibles, lisibles.

La présente invention a donc pour objet un procédé de sécurisation d'informations sensibles comprenant :
a) une étape de protection telle que définie ci-dessus, conduisant à des informations sensibles sous forme sécurisée,
b) une étape de lecture des informations sécurisées obtenues à l'étape a), permettant de retrouver les information sensibles.

En général, entre l'étape de protection et l'étape de lecture, le procédé de sécurisation comprend une étape d'enregistrement des informations sécurisées sur un support de données.

L'étape de lecture va maintenant être décrite.

Aussi, la présente invention a également pour objet un procédé de lecture d'informations protégées dans lequel, la lecture des informations protégées est réalisée sous forme numérique, par application d'un traitement numérique, mettant en oeuvre au moins une signature numérique obtenue à partir d'au moins une caractéristique structurelle d'un élément matériel choisi parmi tout ou partie d'un matériau fibreux, plastique, métallique, en cuir, en bois, composite, en verre, en minéral, en structure cristalline.

Tout ce qui a été dit précédemment dans la partie relative à la protection des informations sensibles, en particulier, en ce qui concerne le choix de l'élément matériel, l'obtention des caractéristiques structurelles, des signatures numériques, s'applique à la lecture.

De façon schématique, la lecture des informations protégées va être effectuées grâce à un traitement numérique correspondant sensiblement au traitement numérique inverse de celui utilisé pour leur protection, en utilisant une ou des signatures numériques de l'élément matériel ayant servi à leur protection, comme clé(s) de lecture.

Un des problèmes est de conserver et transmettre les renseignements nécessaires à cette lecture. Ces renseignements incluent, bien entendu, la ou les signatures numériques ayant servies à la protection des informations sensibles. La conservation peut se faire à plusieurs niveaux. Tout d'abord, il est possible d'enregistrer, sous forme numérique par exemple, soit la ou les caractéristiques structurelles ayant servi à générer la (ou les) signature(s) numérique(s), soit la (ou les) signature(s) numérique(s) elle(s)-même(s). Dans ce cas, il y a dématérialisation de l'élément matériel qui n'a plus besoin d'être conservé et peut être détruit. Il est cependant nécessaire de gérer parfaitement la sécurité des données numériques conservées. Dans ce cas, la(es) signature(s) numérique(s) utilisée(s) pour la lecture correspondent exactement à celle(s) utilisée(s) pour la protection.

Ensuite, il est également possible de conserver l'élément matériel ayant servi à générer la signature numérique, ce qui implique de repérer et protéger l'élément matériel pour sa réutilisation postérieure. Dans ce dernier cas, il faudra être capable généralement de reproduire toutes les étapes mises en oeuvre pour obtenir la signature numérique utilisée pour la protection. C'est-à-dire qu'il faut :
- reprendre l'élément matériel ayant servi à sécuriser les informations sensibles. Cet élément matériel aura pu être indexé à ces dernières, par le biais d'une base de données, ou bien être lié à une partie des informations sensibles originelles (impression d'un code par exemple),
- extraire, acquérir une ou plusieurs caractéristiques structurelles de cet élément matériel par le biais d'un ou plusieurs capteurs avec ou sans contact avec l'élément matériel, suivi(s) en général d'une unité de traitement analogique (optique ou électronique par exemple) ou numérique (carte d'acquisition branchée à une plate-forme quelconque informatique ou automatique). Une ou plusieurs signature(s) numérique(s) sont ainsi générées, éventuellement après codage des caractéristiques structurelles, par application d'un ou plusieurs algorithmes, dont la nature peut varier en fonction du type d'élément matériel choisi et de l'application visée.

Les étapes mises en oeuvre dans le procédé de lecture utilisent, de préférence, les mêmes conditions opératoires que celles mises en oeuvre dans le procédé de protection des informations. La capacité à retrouver ou à reproduire parfaitement une ou plusieurs signatures numériques données à partir d'un élément matériel est généralement indispensable, pour bien mettre en oeuvre le procédé de lecture. Le facteur d'échelle, la sensibilité du capteur (filtrage), le positionnement de l'élément ... sont des paramètres à bien prendre en compte lors de la sélection de la caractéristique structurelle à détecter sur l'élément matériel. Il est néanmoins possible d'envisager de faire appel à des clés de contrôle ou à des codes correcteurs d'erreurs, plus généralement des techniques de détection et de correction d'erreurs, permettant de palier des erreurs de lecture. On peut aussi autoriser la récupération des informations sensibles numériques originales selon la réussite à un test de dépendance statistique entre la ou les signatures numériques extraites au moment de la lecture et celles ayant servi à la sécurisation, par exemple stockées dans une base de données. Par conséquent, dans le cas où lors de la lecture, les signatures numériques sont retrouvées à partir de l'élément matériel, celles-ci pourront être légèrement différentes de celles utilisées pour la protection et donc être soumises à des clés de contrôle, de code correcteurs d'erreurs ou à un test de dépendance statistique.

On peut encore utiliser d'autres moyens permettant de récupérer l'information numérique originale, malgré une reproduction imparfaite de la signature numérique de l'élément matériel lors de la phase de lecture. Par exemple, l'introduction de redondance dans les informations sensibles originales avant la phase de protection des informations par le procédé objet de l'invention, donne de la solidité au procédé de lecture.

Il est à noter, de plus, que dans certains cas, il est même possible de mettre en oeuvre une ou des signatures numériques légèrement différentes de celles ayant servi à la protection des données originales mais provenant du même élément matériel original, et malgré tout retrouver sinon intactes les informations originales, du moins leur signification. Par exemple, une photo d'identité légèrement floue ou avec des défauts mineurs n'empêche en rien de reconnaître la personne ...

Concernant le transport des renseignements nécessaires à la lecture, incluant notamment l'élément matériel, la caractéristique structurelle sous forme numérique ou la signature numérique, l'invention présente également un intérêt particulier : l'élément générateur de la signature numérique est d'origine physique et peut être transporté physiquement par un canal totalement distinct des canaux numériques. Si l'on se met d'accord sur un autre secret (algorithmes de générations de signatures numériques, nombres de signatures numériques utiles sur un ensemble plus grand, ordre de mise en oeuvre de ces clés, ... ), les renseignements numériques peuvent être transmis directement, voire être eux-mêmes protégés par une autre variante de l'invention, lors de leur transmission.

Avant la mise en oeuvre du procédé de protection, l'opérateur a en sa possession des informations sensibles sous forme numérique à sécuriser et un élément matériel. Après sa mise en oeuvre, l'opérateur a en sa possession les informations sensibles sécurisées enregistrées sur un support de données, l'élément matériel et les informations sensibles originales. Ces dernières peuvent être, soit stockées en sécurité pour vérifier postérieurement l'intégrité des informations sécurisées, par exemple, soit détruites. Il ne reste, alors, plus que l'élément matériel et le support porteur des informations sensibles sécurisées. Les informations sensibles sécurisées ne pourront être lues que par celui qui possédera l'élément matériel et la connaissance détaillée des moyens mis en oeuvre pour générer la signature numérique, puis assurer la protection des informations. La sûreté du système est doublement assurée par la sûreté de conservation de l'élément matériel, et la sûreté du secret des détails du procédé. Lorsqu'une information numérique a été sécurisée à partir de l'analyse de la texture d'un papier, et que seule une zone ou des zones bien délimitées de ce papier constituent l'élément matériel, alors la sûreté du procédé est assurée par la préservation du papier et la connaissance des zones actives de cet élément matériel. Cet exemple illustre la force de ce genre de protection de l'information numérique, qui permet de conserver d'un côté l'élément matériel ayant été mis en oeuvre (sans avoir à en dévoiler la nature d'ailleurs) et de pouvoir, en toute sécurité, transmettre ou stocker l'information sécurisée. Une partie du système est conservée matériellement, une partie est immatérielle et numérique.

Bien entendu, une alternative mentionnée précédemment est de conserver non pas l'élément matériel mais sa signature numérique ou les caractéristiques, sous forme numérique par exemple, rendant compte de sa structure complexe chaotique, unique et stable. Ces dernières sont alors sauvegardées de manière durable et sûre et pourront être utilisées directement pour la lecture, l'élément matériel original pouvant éventuellement être détruit. L'intérêt ici est d'obtenir la sécurisation en s'appuyant sur les propriétés structurelles complexes, chaotiques et uniques de l'élément matériel, et en conservant des images numériques de celles-ci (dématérialisée) pour faciliter la mise en oeuvre de la phase de lecture. La sûreté de stockage des caractéristiques numérisées et/ou des signatures numériques est alors critique. Elles peuvent bien évidemment être sécurisées par tous les moyens classiques du type cryptographie, stéganographie, clé matérielle USB (Universal Serial Bus), carte à puce ou autre.

Le procédé de lecture selon l'invention est appliqué sur les informations protégées sous forme numérique, auxquelles on fait subir un traitement numérique inverse à celui mis en oeuvre pour sa protection. Il doit, le plus souvent, reproduire à l'inverse l'algorithme, traitement, ou combinaison utilisée pour la protection, la signature utilisée pour la protection jouant alors le rôle de clé de lecture, au sens large du terme, de sorte que les informations sensibles originales redeviennent au moins partiellement lisibles. A titre d'exemple, on utilisera un algorithmes de reconstruction, un ou des algorithmes de déchiffrement inverse de ceux mis en oeuvre pour la protection, la ou les signatures numériques servant de clés de déchiffrement.

Dans le cas où la phase de lecture utilise l'élément matériel pour retrouver la signature numérique nécessaire, on utilisera un dispositif qui comprend des moyens pour repérer un élément matériel sélectionné et détecter sur ce dernier, une ou plusieurs de ses caractéristiques structurelles, en particulier rendant compte de sa structure complexe, chaotique, unique et stable, reliés à une unité de stockage et de traitement assurant :
a2) l'acquisition, la mise en forme/le conditionnement, la numérisation et éventuellement le codage selon un ou plusieurs algorithmes de la ou des caractéristiques structurelles détectées pour générer une (ou des) signature(s) numérique(s), qui rendent avantageusement compte du caractère complexe, chaotique, unique et stable de la structure de l'élément matériel,
b2) la lecture des informations sensibles protégées par mise en oeuvre d'un traitement numérique qui utilise la ou les signatures numériques générées à l'étape a2, comme clé(s) de lecture, et qui correspond avantageusement au traitement numérique sensiblement inverse à celui utilisé pour l'association de la (ou des) signature(s) numérique(s) aux informations sensibles originales, lors de leur protection.

En particulier, l'unité de stockage et de traitement assure :
a2) la numérisation et éventuellement le codage selon un ou plusieurs algorithmes de la ou des caractéristiques structurelles détectées pour générer une (ou des) signature(s) numérique(s),
b2) la lecture des informations sensibles protégées par mise en oeuvre d'un traitement numérique qui utilise la ou les signatures numériques générées à l'étape a2, comme clé(s) de lecture, et qui correspond au traitement numérique sensiblement inverse à celui utilisé pour l'association de la (ou des) signature(s) numérique(s) aux informations sensibles originales, lors de leur protection.

On comprend bien que le procédé de protection et le procédé de lecture peuvent être mis en oeuvre par un même dispositif.

La protection selon l'invention est, par exemple, mise en oeuvre pour protéger des informations sensibles numériques (télécommunications, musique, vidéo, multimédia, ...), en vue de leur transport sur des réseaux peu sûrs et/ou en vue de contrôler/garantir leur utilisation ultérieure. Dans ce genre d'applications, la dématérialisation de l'élément matériel comme clé de sécurisation peut avoir tout son intérêt. En effet, si l'on souhaite réaliser une sécurisation d'un signal numérique afin de le transporter sur des réseaux peu sûrs et/ou en contrôler et/ou garantir son utilisation ultérieure, et de plus que cette phase de lecture doive avoir lieu géographiquement et/ou dans un délai rendant impossible le transport de l'élément matériel, on peut imaginer, par exemple, émettre simultanément ou légèrement en déphasage le signal numérique sécurisé et les caractéristiques structurelles numérisées de l'élément matériel et/ou les signatures numériques associées. La sûreté de l'opération est, alors, assurée par l'aspect algorithmique à mettre en oeuvre dans le procédé de lecture et par la nature intrinsèquement chaotique, donc imprévisible, de l'élément matériel que l'on retrouve dans ses caractéristiques structurelles numérisées et/ou les signatures numériques associées. On peut aussi imaginer deux types distincts de canaux de transmission du signal numérique sécurisé d'une part, et des caractéristiques numérisées de l'élément matériel et/ou des signatures numériques associées d'autre part.

Le support de données sur lequel les informations protégées peuvent être stockées constitue également un aspect important. Ce support va également servir le plus souvent à la transmission ou au transport ultérieur des informations protégées. Le stockage peut intervenir de façon permanente ou temporaire. Ce support est porteur des informations protégées : ces informations peuvent être imprimées sur un support physique, en papier par exemple, ou enregistrées sur un support électronique, magnétique, optique. Bien entendu, le support peut être porteur d'autres informations. A titre d'exemples illustratifs, les informations numériques protégées selon le procédé de l'invention peuvent être enregistrées sur disque dur magnétique, bande magnétique, sous forme optique, mémoire holographique, gravées dans un CD ou DVD, sur une clé USB, mémoire flash ou autre, sous forme électronique sur une carte à puce, mais aussi sous forme imprimée ou gravée sur un matériau ou document. Le support physique peut être constitué de plusieurs matériaux, et contenir l'information sécurisée sous différentes formes. Les informations sécurisées peuvent également être stockées sous forme d'une base de données, aisément consultable, soit directement, soit par un réseau de télécommunications (Internet par exemple).

L'information sécurisée peut donc être transmise et reçue par la voie d'un réseau de télécommunications ou par un transport sous forme matérielle.

Le support peut de plus intégrer des moyens de transmission d'information ou intégrer un ou de multiples éléments mis en oeuvre dans une transmission d'information, en particulier des éléments sensibles aux radio-fréquences (antennes actives ou passives par exemple) mis en oeuvre dans une transmission sans contact et à distance d'information. Selon une variante de réalisation, le support est un document papier, un carton ou un non-tissé. Il peut s'agir en particulier d'un papier dit de sécurité (billet de banque, chèque, acte authentique, billetterie,...) rassemblant tout ou partie des sécurités suivantes : éléments embarqués (fils de sécurité, planchettes, ...), filigranes, hologrammes, des micro perforations, des micro impressions, différents types d'impression, réactifs chimiques anti-contrefaçon, ...

Ce support peut se présenter sous la forme d'un document papier ou carton ou non-tissé, dont tout ou partie correspond à l'élément matériel dont est issue la ou les signature(s) numérique(s) ayant servi à la protection des informations sensibles, en partie ou totalement protégé par une enveloppe transparente externe (par exemple plastification ou couchage ou extrusion ou autre) d'un autre matériau jouant un rôle protecteur contre les agressions extérieures normales d'utilisation mais aussi empêchant la séparation du document et de son enveloppe sans destruction du premier. Un traitement de surface avec une résine transparente peut également en assurer la protection.

Les informations sensibles protégées sont donc enregistrées sur ce support, par exemple par impression. Selon une variante, les informations sensibles protégées apparaîtront sous la forme d'un code barre.

Ce support peut aussi se présenter sous forme de papier, carton ondulé ou plat ou non-tissé par exemple transformé en enveloppe, en carton d'emballage, en étiquette, en habit jetable, ...

Certaines formes possibles de support d'informations sécurisées ci-dessus listées, peuvent de plus intégrer intimement tout ou partie de l'élément matériel ayant servi à la protection des informations sensibles et/ou tout ou partie des informations sensibles originales sous quelque forme que ce soit, imprimées ou stockées sous forme numérique. L'élément matériel sera de préférence localisé et protégé.

Dans les applications cartes à puces et/ou à bande magnétique, cela est particulièrement intéressant puisque l'on met de « l'intelligence » dans le support et on lie de manière bi-univoque l'élément matériel/support et les informations sécurisées. Les informations originales ne sont alors accessibles qu'au possesseur de l'élément matériel. Ce couplage des informations originales et de l'élément matériel permet de plus une vérification implicite de l'authenticité de la carte. Les informations sensibles numériques présentes en clair sur le support permettent aussi de vérifier l'intégrité de ces informations et/ou des informations sécurisées par simple comparaison.

Le support physique peut, de manière analogue, intégrer intimement tout ou partie de l'élément matériel ayant servi à la mise en oeuvre de la protection et/ou tout ou partie de la ou des caractéristiques structurelles extraites de l'élément matériel sous quelque forme que ce soit, et/ou tout ou partie de la ou des signatures numériques de l'élément matériel sous quelque forme que ce soit. Notamment, il intègre au moins une signature numérique obtenue à partir d'une caractéristique quasi-invariante d'un élément matériel rendant compte de sa structure complexe unique, de préférence, sous forme cryptée.

A titre d'autres exemples de support, dont on peut vérifier l'authenticité, on peut citer :
- une carte en papier sur laquelle sont imprimées, d'une part, les informations sensibles originales, d'autre part, les informations sensibles protégées et dont une partie correspond à l'élément matériel papier ayant servi à générer la signature électronique, cet élément étant protégé et localisé par un film plastique,
- un support papier dont une partie correspond à l'élément matériel, emprisonné au sein d'un CD sur lequel sont gravées, les informations protégées grâce à une signature numérique générée avec l'élément matériel papier.

Par conséquent, si le procédé de lecture autorise la lecture réussie des informations sensibles, il valide également le caractère authentique de la ou des signatures numériques utilisées, et/ou de l'élément matériel dont elles sont issues, et/ou du support porteur des informations sensibles protégées.

De plus, une étape supplémentaire, dans le procédé de lecture, comparant les informations lues avec les informations sensibles connues de l'utilisateur permet de valider le caractère authentique de la ou des signatures numériques mises en oeuvre, de l'élément matériel dont elles sont issues et des informations sensibles. Cet aspect est particulièrement avantageux, lorsque le support sert à la réalisation de documents d'identité, de carte d'accès...

Les procédés de protection et de lecture selon l'invention peuvent, bien entendu, s'intégrer en amont ou en aval d'un procédé applicatif plus général. En particulier, ils pourront être utilisés, seuls ou en combinaison, avec d'autres procédés, pour la traçabilité de produits et services, la gestion documentaire, la fabrication de documents de sécurité, d'actes authentiques, d'étiquettes embarquées ou non, la confidentialité de courrier physique ou électronique, la certification d'origine de document papier ou électronique, le paiement électronique, la signature électronique, pour générer des codes barres, lettre recommandée avec accusé de réception, suivi de courrier ou de colis, enveloppe, tatouage numérique, ...

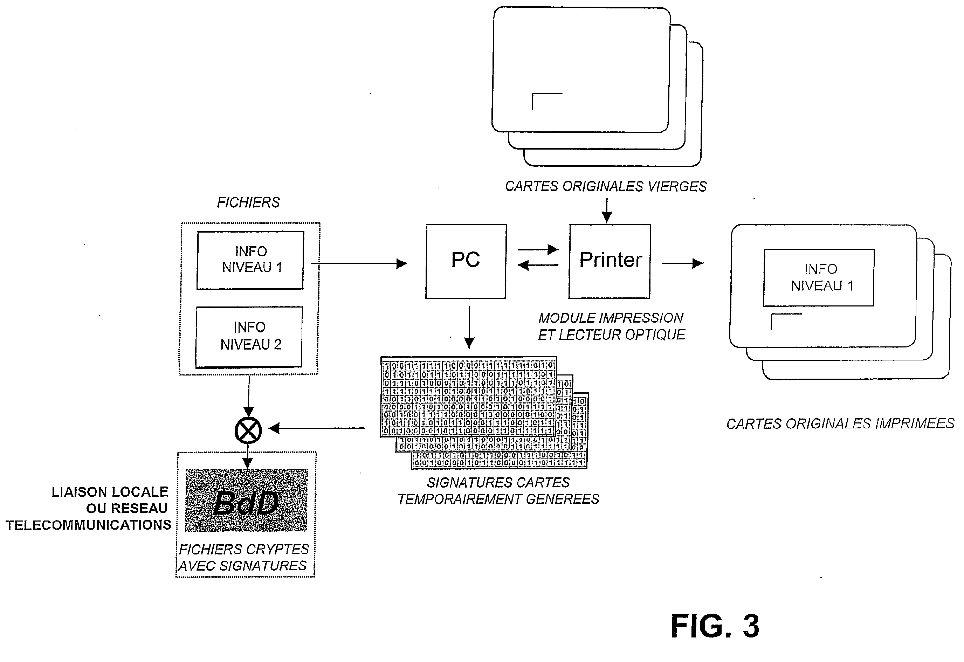

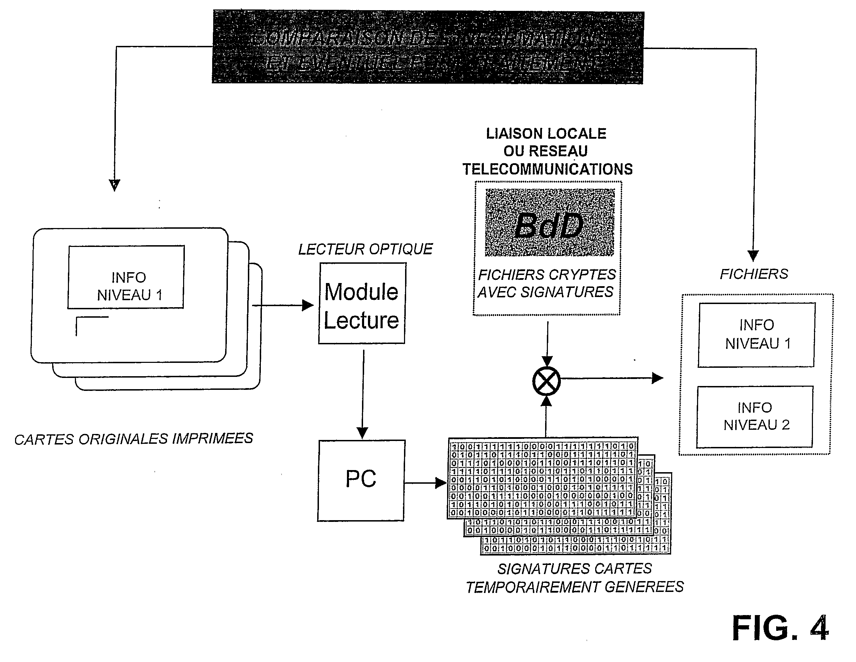

Les **FIG. 3** et **4** illustrent un exemple de mise en oeuvre des procédés de protection et de lecture selon l'invention. Dans cet exemple, l'élément matériel considéré est une carte en papier/carton, voire une carte plastique intégrant un élément matériel papier/carton, dont la structure chaotique du matériau est accessible par transvision.

La phase d'écriture illustré **FIG. 3** met en oeuvre le procédé de protection selon l'invention, à partir d'un ensemble de cartes originales vierges, intégrant chacune un élément matériel générateur d'une signature numérique, du type ci-dessus décrit, des fichiers numériques contenant deux types d'information (niveau 1 qui sera imprimé sur une carte et niveau 2 qui sera sécurisé avec le niveau 1 par exemple), un PC avec carte d'acquisition, une imprimante munie d'un module de lecture optique des caractéristiques rendant compte de la structure complexe unique de l'élément matériel, ou dans une autre configuration un module de lecture optique dissocié de l'imprimante. Les informations numériques (niveau 1 et niveau 2) qui seront liées aux cartes peuvent être en partie similaires. Au moment du passage d'une carte dans l'imprimante ou le module externe de lecture optique, on lui imprime l'information de niveau 1, et on extrait la ou les caractéristiques structurelles sous forme numérique de l'élément matériel présent, on génère les signatures numériques associées, que l'on stocke temporairement dans le PC, afin de réaliser une combinaison (directe ou indirecte) de l'information numérique (niveau 1 et niveau 2) avec lesdites signatures. A la fin de la phase d'écriture, les cartes sont imprimées avec une partie de l'information sécurisée sous forme intelligible, et des fichiers contenant les informations numériques (niveau 1 et niveau 2) cryptées avec les signatures numériques extraites des éléments matériels successifs, sont stockés de manière durable dans une base de données de référence (avec ou sans index carte/fichier sécurisé). Ces fichiers cryptés pourront être transmis par liaison locale ou réseau de télécommunication.

La phase de lecture illustrée **FIG. 4** met, quant à elle, en oeuvre le procédé de lecture selon l'invention. Le jeu de cartes originales imprimées, obtenues dans la phase d'écriture est analysé par passage dans un lecteur optique, une carte d'acquisition et un PC, les signatures numériques sont générées et stockées de manière temporaire dans la mémoire du PC, afin de pouvoir essayer lesdites signatures sur les fichiers sécurisées présents dans la base de données de référence. Si la carte testée permet l'accès aux informations numériques de niveau 1 et de niveau 2 contenues dans un fichier crypté, on a alors plusieurs informations conjointement : d'une part que la carte (clé) est authentique, d'autre part, en comparant l'information de niveau 1 comprise dans le fichier crypté et l'information de niveau 1 imprimée sur la carte, que s'il y a identité alors le fichier crypté et/ou l'information présente sur la carte sont intègres, c'est-à-dire qu'ils n'ont pas été modifiés depuis la création de la carte.

## Revendications

1. Procédé de lecture d'informations sensibles protégées **caractérisé en ce que** la lecture est réalisée en soumettant les informations sensibles protégées sous forme numérique à un traitement numérique qui met en oeuvre une ou des signatures numériques obtenue(s) à partir d'au moins une caractéristique structurelle d'un élément matériel choisi parmi tout ou partie d'un matériau fibreux, plastique, métallique, en cuir, en bois, composite, en verre, en minéral ou en une structure cristalline, la ou les signatures numériques étant utilisées en tant que clé de lecture.

2. Procédé de lecture d'informations sensibles protégées selon la revendication 1 **caractérisé en ce que** la protection des informations sensibles a mis en oeuvre les informations sensibles sous forme numérique et au moins une signature numérique obtenue à partir d'au moins une caractéristique structurelle d'un élément matériel choisi parmi tout ou partie d'un matériau fibreux, plastique, métallique, en cuir, en bois, composite, en verre, en minéral ou en une structure cristalline, et **en ce que**, la lecture est réalisée en soumettant les informations sensibles protégées sous forme numérique à un traitement numérique inverse de celui utilisé pour leur protection et qui met en oeuvre une ou des signatures numériques de l'élément matériel regénérée(s) lors de la lecture.

3. Procédé de lecture d'informations sensibles protégées selon la revendication 1 **caractérisé en ce que** la protection des informations sensibles a mis en oeuvre les informations sensibles sous forme numérique et au moins une signature numérique obtenue à partir d'au moins une caractéristique structurelle d'un élément matériel choisi parmi tout ou partie d'un matériau fibreux, plastique, métallique, en cuir, en bois, composite, en verre, en minéral ou en une structure cristalline, et **en ce que**, la lecture est réalisée en soumettant les informations sensibles protégées sous forme numérique à un traitement numérique inverse de celui utilisé pour leur protection et qui met en oeuvre une ou des signatures numériques de l'élément matériel ayant servi à leur protection.

4. Procédé de lecture d'informations sensibles protégées selon l'une des revendications 1 à 3 **caractérisé en ce qu'**il utilise au moins une signature numérique obtenue à partir d'au moins une caractéristique structurelle d'un élément matériel rendant compte de sa structure complexe, chaotique, unique et stable.

5. Procédé selon l'une des revendications 1 à 4 **caractérisé en ce que** la(es) signature(s) numérique(s) est(sont) aléatoires.

6. Procédé selon la revendication 5 **caractérisé en ce que** la(es) signature(s) numérique(s) présente(nt) un caractère complexe et aléatoire qui reflète la structure du matériau dont elles sont extraites.

7. Procédé selon l'une des revendications 1 à 6 **caractérisé en ce que** l'élément matériel est choisi parmi tout ou partie d'un papier, carton ou non-tissé.

8. Procédé selon la revendication 7 **caractérisé en ce que** l'élément matériel est une partie d'un papier, carton ou non-tissé, sur lequel il est repéré par un matériau transparent, stable dans le temps et assurant sa protection, par exemple, un revêtement plastique ou une résine.

9. Procédé selon l'une des revendications 3 à 8 **caractérisé en ce que** la ou les signatures numériques utilisées lors de la lecture correspondent à celles utilisées lors de la protection.

10. Procédé selon la revendication 9 **caractérisé en ce que** la ou les caractéristiques structurelles numériques et/ou la ou les signatures numériques mises en oeuvre lors de la protection sont sauvegardées de manière durable et sûre, alors que l'élément matériel est détruit, et sont utilisées lors de la lecture.

11. Procédé selon l'une des revendications 3 à 8 **caractérisé en ce que** la ou les signatures numériques utilisées lors de la lecture sont soumises à des clés de contrôle, de code correcteurs d'erreurs ou à un test de dépendance statistique.

12. Procédé selon l'une des revendications 1 à 11 **caractérisé en ce que**, si sa mise en oeuvre autorise la lecture réussie des informations sensibles, il valide également le caractère authentique de la ou des signatures numériques utilisées, et/ou de l'élément matériel dont elles sont issues.

13. Procédé selon l'une des revendications 1 à 12 **caractérisé en ce qu'**il comprend une étape supplémentaire de comparaison des informations lues avec les informations sensibles connues de l'utilisateur, permettant ainsi de valider, le caractère authentique de la ou des signatures numériques mises en oeuvre, de l'élément matériel dont elles sont issues et des informations sensibles.

14. Procédé selon l'une des revendications 1 à 13 **caractérisé en ce que** la signature numérique de l'élément matériel est obtenue par détection, à l'aide d'un ou plusieurs capteurs, d'une ou plusieurs caractéristiques structurelles de cet élément, suivie d'une numérisation, éventuellement accompagnée d'un codage selon un ou plusieurs algorithmes, de cette ou ces caractéristiques structurelles.

15. Procédé selon la revendication 14 **caractérisé en ce que** la(es) caractéristique(s) structurelle(s) détectée(s) rend(ent) compte de la structure complexe, chaotique, unique et stable de l'élément matériel.

16. Procédé selon la revendication 14 ou 15 **caractérisé en ce que** la détection est réalisée grâce à un capteur optique ou électronique, après application sur l'élément matériel d'une onde ou d'un rayonnement électromagnétique.

17. Procédé selon la revendication 14 ou 15 **caractérisé en ce que** la détection est réalisée grâce à un capteur avec contact, l'élément matériel servant de support d'une onde ultrasonique, ou d'une sollicitation du type électrique, thermique, chimique, biologique, le comportement/la réponse de l'élément matériel soumis à cette onde ou sollicitation étant enregistrée dans différentes orientations.

18. Procédé selon l'une des revendications 1 à 17 **caractérisé en ce que** la signature numérique se présente sous une forme binaire ou sous la forme d'une image réelle ou complexe ou plusieurs images en niveaux de gris.

19. Procédé selon l'une des revendications 1 à 18 **caractérisé en ce qu'**il met en oeuvre la signature numérique d'un élément matériel, partie d'un papier, carton ou non-tissé, obtenue après détection de son interaction avec la lumière visible par transvision, en utilisant un capteur CCD ou CMOS.

20. Procédé selon l'une des revendications 1 à 19 **caractérisé en ce que** la lecture utilise un ou des algorithmes de décryptage, la ou les signatures numériques servant de clés de décryptage.

21. Procédé selon l'une des revendications 2 à 18 **caractérisé en ce que** la protection des informations sensibles sous forme numérique est réalisée au moyen d'un algorithme stéganographique, la(es) signature(s) numérique(s) de l'élément matériel jouant le rôle de clés de stéganographie.

22. Procédé selon l'une des revendications 2 à 18 **caractérisé en ce que** la protection des informations sensibles sous forme numérique est réalisée par combinaison avec au moins une signature numérique d'un élément matériel, rendant au moins partiellement illisibles, à la fois les informations sensibles sous forme numérique et la signature numérique.

23. Procédé selon la revendication 22 **caractérisé en ce que** la combinaison est réalisée à partir de la forme binaire, hexadécimale, ASCII ou alphabétique, des informations sensibles sous forme numérique et de la ou des signatures numériques de l'élément matériel, par application conjointement ou non des principes de permutation, transposition, substitution, itération, masque (opérateurs logiques dont XOR, addition, soustraction, bit à bit (en chaîne), ou bloc à bloc ...) ou propriétés mathématiques d'algèbre modulaire (modulo n), de théorie des nombres.

24. Procédé selon la revendication 22 **caractérisé en ce que** la combinaison a été réalisée par application du principe de masque jetable.

25. Procédé selon l'une des revendications 2 à 18 **caractérisé en ce que** la protection des informations sensibles sous forme numérique a été réalisée, en utilisant la(es) signature(s) numérique(s) comme « enveloppe numérique» des informations numériques sensibles sous forme comprimée, cryptée et/ou stéganographiée.

26. Procédé selon l'une des revendications 1 à 25 **caractérisé en ce que** la ou les caractéristiques structurelles sont numérisées, puis échantillonnées dans le temps.

27. Procédé selon l'une des revendications 1 à 25 **caractérisé en ce que** les informations sensibles sont dynamiques, telles qu'une séquence sonore et/ou vidéo.

28. Procédé selon la revendication 27 **caractérisé en ce que** la protection est réalisée au moyen d'une signature numérique dynamique obtenue par répétition d'une signature numérique statique ou par détection répétée, à l'aide d'un ou plusieurs capteurs, d'une ou plusieurs caractéristiques structurelles d'un élément matériel statique.

29. Procédé selon la revendication 27 **caractérisé en ce que** la protection est réalisée au moyen d'une signature numérique dynamique obtenue par détection en continu, à l'aide d'un ou plusieurs capteurs, d'une ou plusieurs caractéristiques structurelles d'un élément matériel en mouvement relatif par rapport au(x) capteur(s).

30. Procédé selon la revendication 29 **caractérisé en ce que** l'élément matériel est une bobine de papier, carton ou non-tissé, en défilement, ou du papier en cours de fabrication sur machine à papier.

31. Procédé selon l'une des revendications 2 à 30 **caractérisé en ce que** la protection met en oeuvre plusieurs signatures numériques d'un même ou de différents éléments matériels, et **en ce que** la lecture fait appel à plusieurs signatures numériques d'un ou plusieurs éléments matériels, autorisant des niveaux d'accès distincts à certaines parties des informations sensibles.

32. Dispositif adapté pour la mise en oeuvre du procédé de lecture selon l'une des revendications 1 à 31, **caractérisé en ce qu'**il comprend des moyens pour repérer un élément matériel sélectionné et détecter sur ce dernier, une ou plusieurs de ses caractéristiques structurelles, en particulier rendant compte de sa structure complexe, chaotique, unique et stable, reliés à une unité de stockage et de traitement assurant :
a2) la numérisation et éventuellement le codage selon un ou plusieurs algorithmes de la ou des caractéristiques structurelles détectées pour générer une (ou des) signature(s) numérique(s),
b2) la lecture des informations sensibles protégées par mise en oeuvre d'un traitement numérique qui utilise la ou les signatures numériques générées à l'étape a2, comme clé(s) de lecture, et qui correspond avantageusement au traitement numérique sensiblement inverse à celui utilisé pour l'association de la (ou des) signature(s) numérique(s) aux informations sensibles originales, lors de leur protection.

33. Dispositif selon la revendication 32 **caractérisé en ce qu'**un capteur optique est utilisé pour détecter la ou les caractéristiques structurelles de l'élément matériel.

34. Dispositif selon la revendication 32 ou 33 **caractérisé en ce que** le capteur optique est un capteur CCD ou CMOS assurant la détection de la ou des caractéristiques structurelles par transvision.

35. Procédé de sécurisation d'informations sensibles comprenant les étapes suivantes :
a) une étape de protection de la lecture directe des informations sensibles mettant en oeuvre une signature numérique obtenue à partir d'un élément matériel, permettant d'obtenir les informations sensibles sous forme protégées,
b) une étape de lecture des informations protégées à l'étape a) conformément à l'une quelconque des revendications 1 à 31 permettant de retrouver les informations sensibles.

36. Procédé de sécurisation selon la revendication 35 **caractérisé en ce que** l'étape a) est suivie d'une étape d'enregistrement des informations sensibles sous forme protégée sur un support de données.

37. Procédé de sécurisation selon la revendication 35 ou 36, **caractérisé en ce que** l'étape a) de protection des informations sensibles sous forme numérique est réalisée au moyen d'un algorithme cryptographique, la(es) signature(s) numérique(s) de l'élément matériel jouant le rôle de clé(s) de cryptographie et l'étape b) de lecture est conforme au procédé de la revendication 20.

38. Procédé de sécurisation selon la revendication 35 ou 36 **caractérisé en ce que** l'étape a) de protection des informations sensibles sous forme numérique est réalisée au moyen d'un algorithme stéganographique, la(es) signature(s) numérique(s) de l'élément matériel jouant le rôle de clé(s) de stéganographie et l'étape b) lecture est conforme au procédé de la revendication 21.

39. Procédé de sécurisation selon la revendication 35 ou 36 caractérisé en que la protection des informations sensibles sous forme numérique est réalisée par combinaison avec au moins une signature numérique d'un élément matériel, rendant au moins partiellement illisibles, à la fois les informations sensibles sous forme numérique et la signature numérique, à partir de leur forme binaire, hexadécimale, ASCII ou alphabétique, par application conjointement ou non des principes de permutation, transposition, substitution, itération, masque (opérateurs logiques dont XOR, addition, soustraction, bit à bit (en chaîne), ou bloc à bloc ...) ou propriétés mathématiques d'algèbre modulaire (modulo n), de théorie des nombres, et l'étape b) de lecture est conforme au procédé de la revendication 23.

40. Procédé de sécurisation selon la revendication 39 **caractérisé en ce que** la combinaison utilisée à l'étape a) a été réalisée par application du principe de masque jetable, et l'étape b) de lecture est conforme au procédé de la revendication 24.

41. Procédé de sécurisation selon la revendication 35 ou 36, caractérisé en que l'étape a) de protection des informations sensibles sous forme numérique a été réalisée, en utilisant la(es) signature(s) numérique(s) comme « enveloppe numérique» des informations numériques sensibles sous forme comprimée, cryptée et/ou stéganographiée, et l'étape b) de lecture est conforme au procédé de la revendication 25.

42. Procédé de sécurisation selon l'une des revendications 35 à 41 **caractérisé en ce que** l'étape a) utilise au moins une signature numérique obtenue à partir d'au moins une caractéristique structurelle d'un élément matériel rendant compte de sa structure complexe, chaotique, unique et stable, et l'étape b) de lecture est conforme au procédé de la revendication 4.

43. Procédé de sécurisation selon l'une des revendications 35 à 42 **caractérisé en ce que** l'élément matériel de l'étape a) est choisi parmi tout ou partie d'un papier, carton ou non-tissé, et l'étape b) de lecture est conforme au procédé de la revendication 7.

44. Procédé de sécurisation selon la revendication 43 **caractérisé en ce que** l'élément matériel de l'étape a) est une partie d'un papier, carton ou non-tissé, sur lequel il est repéré par un matériau transparent, stable dans le temps et assurant sa protection, par exemple, un revêtement plastique ou une résine, et l'étape b) de lecture est conforme au procédé de la revendication 8.

45. Procédé de sécurisation selon les revendications 35 à 44 **caractérisé en ce que** la signature numérique de l'élément matériel utilisé à l'étape a) est obtenue par détection, à l'aide d'un ou plusieurs capteurs, d'une ou plusieurs caractéristiques structurelles de cet élément, suivie d'une numérisation et éventuellement accompagnée d'un codage selon un ou plusieurs algorithmes de cette ou ces caractéristiques structurelles, et l'étape b) de lecture est conforme au procédé de la revendication 14.

46. Procédé de sécurisation selon la revendication 45 **caractérisé en ce que** la(es) caractéristique(s) structurelle(s) utilisées à l'étape a) rend(ent) compte de sa structure complexe, chaotique, unique et stable, et l'étape b) de lecture est conforme au procédé de la revendication 15.

47. Procédé de sécurisation selon la revendication 45 ou 46 **caractérisé en ce que** la détection est réalisée à l'étape a) grâce à un capteur optique ou électronique, après application sur l'élément matériel d'une onde ou d'un rayonnement électromagnétique, et l'étape b) de lecture est conforme au procédé de la revendication 16.

48. Procédé de sécurisation selon la revendication 45 ou 46 **caractérisé en ce que** la détection est réalisée à l'étape a) grâce à un capteur avec contact, l'élément matériel servant de support d'une onde ultrasonique, ou d'une sollicitation du type électrique, thermique, chimique, biologique, le comportement/la réponse de l'élément matériel soumis à cette onde ou sollicitation étant enregistrée dans différentes orientations, et l'étape b) de lecture est conforme au procédé de la revendication 17.

49. Procédé de sécurisation selon l'une des revendications 35 à 48 **caractérisé en ce que** la signature numérique générée à l'étape a) se présente sous une forme binaire ou sous la forme d'une image ou plusieurs images en niveaux de gris, et l'étape b) de lecture est conforme au procédé de la revendication 18.

50. Procédé de sécurisation selon l'une des revendications 35 à 49 **caractérisé en ce qu'**il met en oeuvre la signature numérique générée à l'étape a) d'un élément matériel, partie d'un papier, carton ou non-tissé, obtenue après détection de son interaction avec la lumière visible par transvision, en utilisant un capteur CCD ou CMOS, et l'étape b) de lecture est conforme au procédé de la revendication 19.

51. Procédé de sécurisation selon l'une des revendications 35 à 50 **caractérisé en ce que** la ou les caractéristiques structurelles utilisées à l'étape a) sont numérisées, puis échantillonnées dans le temps, et l'étape b) de lecture est conforme au procédé de la revendication 26.

52. Procédé de sécurisation selon l'une des revendications 35 à 51 **caractérisé en ce que** les informations sensibles sont dynamiques, telles qu'une séquence sonore et/ou vidéo, et l'étape b) de lecture est conforme au procédé de la revendication 27.

53. Procédé de sécurisation selon la revendication 52 **caractérisé en ce que** la protection de l'étape a) est réalisée au moyen d'une signature numérique dynamique obtenue par répétition d'une signature numérique statique ou par détection répétée, à l'aide d'un ou plusieurs capteurs, d'une ou plusieurs caractéristiques structurelles d'un élément matériel statique, conformément à la revendication 28.

54. Procédé de sécurisation selon la revendication 53 **caractérisé en ce que** la protection de l'étape a) est réalisée au moyen d'une signature numérique dynamique obtenue par détection en continu, à l'aide d'un ou plusieurs capteurs, d'une ou plusieurs caractéristiques structurelles d'un élément matériel en mouvement relatif par rapport au(x) capteur(s), conformément à la revendication 29.

55. Procédé de sécurisation selon la revendication 54 **caractérisé en ce que** l'élément matériel est une bobine de papier, carton ou non-tissé, en défilement, ou du papier en cours de fabrication sur machine à papier, conformément à la revendication 30.

56. Procédé de sécurisation selon l'une des revendications 35 à 55 **caractérisé en ce que** la protection de l'étape a) met en oeuvre plusieurs signatures numériques d'un même ou de différents éléments matériels, permettant ultérieurement de donner des accès de lectures partiels et/ou distincts aux informations sensibles, conformément à la revendication 31.

## Patentansprüche

1. Verfahren zum Lesen von geschützten sensiblen Informationen, **dadurch gekennzeichnet, dass** das Lesen durchgeführt wird, indem die sensiblen Informationen, die in digitaler Form geschützt werden, einer digitalen Verarbeitung unterworfen werden, die eine oder mehrere digitale Signaturen anwendet, die ausgehend von mindestens einer strukturellen Eigenschaft eines materiellen Elements erhalten wird (werden), das aus dem gesamten oder einem Teil eines Fasermaterials, Kunststoffmaterials, metallischen Materials, eines Materials aus Leder, aus Holz, eines Verbundmaterials, eines Materials aus Glas, eines mineralischen Materials oder eines Materials aus einer Kristallstruktur ausgewählt wird, wobei die digitale Signatur oder die digitalen Signaturen als Schlüssel zum Lesen verwendet werden.

2. Verfahren zum Lesen von geschützten sensiblen Informationen nach Anspruch 1, **dadurch gekennzeichnet, dass** das Schützen der sensiblen Informationen die sensiblen Informationen in digitaler Form und mindestens eine digitale Signatur anwendet hat, die ausgehend von mindestens einer strukturellen Eigenschaft eines materiellen Elements erhalten wird, das aus dem gesamten oder einem Teil eines Fasermaterials, Kunststoffmaterials, metallischen Materials, eines Materials aus Leder, aus Holz, eines Verbundmaterials, eines Materials aus Glas, eines mineralischen Materials oder eines Materials aus einer Kristallstruktur ausgewählt wird, und dass das Lesen durchgeführt wird, indem die sensiblen Informationen, die in digitaler Form geschützt werden, einer digitalen Verarbeitung unterworfen werden, die umgekehrt zu jener ist, die für ihr Schützen verwendet wird, und die eine digitale Signatur oder digitale Signaturen des materiellen Elements anwendet, die während des Lesens regeneriert wird (werden).

3. Verfahren zum Lesen von geschützten sensiblen Informationen nach Anspruch 1, **dadurch gekennzeichnet, dass** das Schützen der sensiblen Informationen die sensiblen Informationen in digitaler Form und mindestens eine digitale Signatur anwendet hat, die ausgehend von mindestens einer strukturellen Eigenschaft eines materiellen Elements erhalten wird, das aus dem gesamten oder einem Teil eines Fasermaterials, Kunststoffmaterials, metallischen Materials, eines Materials aus Leder, aus Holz, eines Verbundmaterials, eines Materials aus Glas, eines mineralischen Materials oder eines Materials aus einer Kristallstruktur ausgewählt wird, und dass das Lesen durchgeführt wird, indem die sensiblen Informationen, die in digitaler Form geschützt werden, einer digitalen Verarbeitung unterworfen werden, die umgekehrt zu jener ist, die für ihr Schützen verwendet wird, und die eine digitale Signatur oder digitale Signaturen des materiellen Elements anwendet, die für ihr Schützen gedient hat (haben).

4. Verfahren zum Lesen von geschützten sensiblen Informationen nach einem der Ansprüche 1 bis 3, **dadurch gekennzeichnet, dass** es mindestens eine digitale Signatur verwendet, die ausgehend von mindestens einer strukturellen Eigenschaft eines materiellen Elements unter Berücksichtigung seiner komplexen, chaotischen, einzigartigen und stabilen Struktur erhalten wird.

5. Verfahren nach einem der Ansprüche 1 bis 4, **dadurch gekennzeichnet, dass** die digitale Signatur(en) zufällig ist (sind).

6. Verfahren nach Anspruch 5, **dadurch gekennzeichnet, dass** die digitale Signatur(en) einen komplexen und zufälligen Charakter aufweist (aufweisen), der die Struktur des Materials widerspiegelt, aus dem sie entnommen werden.

7. Verfahren nach einem der Ansprüche 1 bis 6, **dadurch gekennzeichnet, dass** das materielle Element aus der Gesamtheit oder einem Teil eines Papiers, Kartons oder Vlieses ausgewählt wird.

8. Verfahren nach Anspruch 7, **dadurch gekennzeichnet, dass** das materielle Element ein Teil eines Papiers, Kartons oder Vlieses ist, auf dem es durch ein transparentes Material, das langfristig stabil ist und seinen Schutz gewährleistet, beispielsweise eine Kunststoffbeschichtung oder ein Harz, erkannt wird.

9. Verfahren nach einem der Ansprüche 3 bis 8, **dadurch gekennzeichnet, dass** die digitale Signatur oder die digitalen Signaturen, die beim Lesen verwendet werden, jenen entsprechen, die beim Schützen verwendet werden.

10. Verfahren nach Anspruch 9, **dadurch gekennzeichnet, dass** die digitale strukturelle Eigenschaft oder die digitalen strukturellen Eigenschaften und/oder die digitale Signatur oder die digitalen Signaturen, die beim Schützen angewendet werden, dauerhaft und sicher abgespeichert werden, während das materielle Element zerstört wird, und beim Lesen verwendet werden.

11. Verfahren nach einem der Ansprüche 3 bis 8, **dadurch gekennzeichnet, dass** die digitale Signatur oder die digitalen Signaturen, die beim Lesen verwendet werden, Prüfziffern, Fehlerkorrekturcodes oder einem Test auf statistische Abhängigkeit unterworfen werden.

12. Verfahren nach einem der Ansprüche 1 bis 11, **dadurch gekennzeichnet, dass**, wenn sein Umsetzen das erfolgreiche Lesen der sensiblen Informationen genehmigt, es ebenfalls den authentischen Charakter der verwendeten digitalen Signatur oder Signaturen und/oder des materiellen Elements, aus dem sie hervorgegangen sind, validiert.

13. Verfahren nach einem der Ansprüche 1 bis 12, **dadurch gekennzeichnet, dass** es einen zusätzlichen Schritt des Vergleichens der gelesenen Informationen mit den sensiblen Informationen, die dem Nutzer bekannt sind, aufweist, wodurch auf diese Weise genehmigt wird, den authentischen Charakter der angewendeten digitalen Signatur oder Signaturen, des materiellen Elements, aus dem sie hervorgegangen sind, und der sensiblen Informationen zu validieren.

14. Verfahren nach einem der Ansprüche 1 bis 13, **dadurch gekennzeichnet, dass** die digitale Signatur des materiellen Elements durch Erkennen mit Hilfe von einem oder mehreren Sensoren einer oder mehrerer struktureller Eigenschaften dieses Elements, gefolgt von einer Digitalisierung, eventuell begleitet von einer Kodierung nach einem oder mehreren Algorithmen dieser strukturellen Eigenschaft oder Eigenschaften erhalten wird.

15. Verfahren nach Anspruch 14, **dadurch gekennzeichnet, dass** die erfasste(n) strukturelle(n) Eigenschaft(en) die komplexe, chaotische, einzigartige und stabile Struktur des materiellen Elements berücksichtigt (berücksichtigen).

16. Verfahren nach Anspruch 14 oder 15, **dadurch gekennzeichnet, dass** das Erkennen dank eines optischen oder elektronischen Sensors nach Anwenden einer elektromagnetischen Welle oder einer elektromagnetischen Strahlung auf das materielle Element durchgeführt wird.

17. Verfahren nach Anspruch 14 oder 15, **dadurch gekennzeichnet, dass** das Erkennen dank eines Sensors mit Kontakt durchgeführt wird, wobei das materielle Element als Träger einer Ultraschallwelle oder einer elektrischen, thermischen, chemischen, biologischen Beanspruchung dient, wobei das Verhalten/die Antwort des materiellen Elements, das dieser Welle oder Beanspruchung unterworfen wird, in verschiedenen Ausrichtungen aufgezeichnet wird.

18. Verfahren nach einem der Ansprüche 1 bis 17, **dadurch gekennzeichnet, dass** die digitale Signatur eine binäre Form oder die Form eines reellen oder komplexen Bildes oder mehrerer Bilder in Graustufen aufweist.

19. Verfahren nach einem der Ansprüche 1 bis 18, **dadurch gekennzeichnet, dass** es die digitale Signatur eines materiellen Elements, Teil eines Papiers, Kartons oder Vlieses, die nach dem Erfassen seiner Wechselwirkung mit dem Licht, das durch Transmission sichtbar ist, unter Verwendung eines CCD- oder CMOS-Sensors anwendet.

20. Verfahren nach einem der Ansprüche 1 bis 19, **dadurch gekennzeichnet, dass** das Lesen einen Entschlüsselungsalgorithmus oder Entschlüsselungsalgorithmen verwendet, wobei die digitale Signatur oder die digitalen Signaturen als Entschlüsselungsschlüssel dienen.

21. Verfahren nach einem der Ansprüche 2 bis 18, **dadurch gekennzeichnet, dass** das Schützen der sensiblen Informationen in digitaler Form mittels eines steganografischen Algorithmus durchgeführt wird, wobei die digitale(n) Signatur(en) des materiellen Elements die Rolle von Steganographie-Schlüsseln spielen.

22. Verfahren nach einem der Ansprüche 2 bis 18, **dadurch gekennzeichnet, dass** das Schützen der sensiblen Informationen in digitaler Form durch Kombination mit mindestens einer digitalen Signatur eines materiellen Elements durchgeführt wird, die gleichzeitig die sensiblen Informationen in digitaler Form und die digitale Signatur mindestens teilweise unlesbar macht.

23. Verfahren nach Anspruch 22, **dadurch gekennzeichnet, dass** die Kombination ausgehend von der binären, hexadezimalen, alphabetischen Form oder von der Form im ASCII-Format der sensiblen Informationen in digitaler Form und von der digitalen Signatur oder den digitalen Signaturen des materiellen Elements durch Anwendung in gemeinsamer Form oder nicht der Prinzipien der Permutation, Transposition, Substitution, Iteration, Maske (logische Operatoren einschließlich XOR, Addition, Subtraktion, ein Bit nach dem anderen (Bitkette) oder ein Block nach dem anderen ...) oder mathematischer Eigenschaften der modularen Algebra (Modul n), der Zahlentheorie durchgeführt wird.

24. Verfahren nach Anspruch 22, **dadurch gekennzeichnet, dass** die Kombination durch Anwenden der Einmalverschlüsselung durchgeführt worden ist.

25. Verfahren nach einem der Ansprüche 2 bis 18, **dadurch gekennzeichnet, dass** das Schützen der sensiblen Informationen in digitaler Form unter Verwendung der digitalen Signatur(en) als "digitalen Umschlag" der sensiblen digitalen Informationen in komprimierter, verschlüsselter und/oder steganographierter Form durchgeführt worden ist.

26. Verfahren nach einem der Ansprüche 1 bis 25, **dadurch gekennzeichnet, dass** die strukturellen Eigenschaften digitalisiert und dann zeitlich abgetastet werden.

27. Verfahren nach einem der Ansprüche 1 bis 25, **dadurch gekennzeichnet, dass** die sensiblen Informationen dynamisch sind, wie eine Tonfolge und/oder Videosequenz.

28. Verfahren nach Anspruch 27, **dadurch gekennzeichnet, dass** das Schützen mittels einer dynamischen digitalen Signatur durchgeführt wird, die durch Wiederholen einer statischen digitalen Signatur oder durch wiederholtes Erkennen mit Hilfe von einem oder mehreren Sensoren einer oder mehrerer struktureller Eigenschaften eines statischen materiellen Elements erhalten wird.

29. Verfahren nach Anspruch 27, **dadurch gekennzeichnet, dass** das Schützen mittels einer dynamischen digitalen Signatur durchgeführt wird, die durch kontinuierliches Erkennen mit Hilfe von einem oder mehreren Sensoren einer oder mehrerer struktureller Eigenschaften eines materiellen Elements, das sich relativ zu dem (den) Sensor(en) in Bewegung befindet, erhalten wird.

30. Verfahren nach Anspruch 29, **dadurch gekennzeichnet, dass** das materielle Element eine laufende Papier-, Karton- oder Vliesrolle oder Papier bei der Herstellung auf einer Papiermaschine ist.

31. Verfahren nach einem der Ansprüche 2 bis 30, **dadurch gekennzeichnet, dass** das Schützen mehrere digitale Signaturen eines gleichen oder verschiedener materieller Elemente anwendet und dass das Lesen mehrere digitale Signaturen von einem oder von mehreren materiellen Elementen nutzt, die Zugangsebenen genehmigen, die sich von gewissen Teilen der sensiblen Informationen unterscheiden.

32. Vorrichtung, die für das Umsetzen des Verfahrens zum Lesen nach einem der Ansprüche 1 bis 31 geeignet ist, **dadurch gekennzeichnet, dass** sie Mittel zum Erkennen eines ausgewählten materiellen Elements und zum Erkennen auf diesem Letzteren einer oder mehrerer seiner strukturellen Eigenschaften insbesondere unter Berücksichtigung seiner komplexen, chaotischen, einzigartigen und stabilen Struktur aufweist, die mit einer Einheit zum Speichern und zum Verarbeiten verbunden sind, die Folgendes gewährleistet:
a2) die Digitalisierung und eventuell die Kodierung nach einem oder mehreren Algorithmen dieser erkannten strukturellen Eigenschaft oder Eigenschaften, um eine digitale Signatur (oder digitale Signaturen) zu generieren,
b2) das Lesen der geschützten sensiblen Informationen durch das Anwenden einer digitalen Verarbeitung, die die digitale Signatur oder die digitalen Signaturen, die in dem Schritt a2 generiert werden, als Leseschlüssel verwendet, und die vorteilhafterweise der digitalen Verarbeitung entspricht, die im Wesentlichen umgekehrt zu jener ist, die für das Zuordnen der digitalen Signatur (oder Signaturen) zu den ursprünglichen sensiblen Informationen während ihres Schützens verwendet wird.

33. Vorrichtung nach Anspruch 32, **dadurch gekennzeichnet, dass** ein optischer Sensor verwendet wird, um die strukturelle Eigenschaft oder die strukturellen Eigenschaften des materiellen Elements zu erkennen.

34. Vorrichtung nach Anspruch 32 oder 33, **dadurch gekennzeichnet, dass** der optischer Sensor ein CCD- oder CMOS-Sensor ist, der das Erkennen der strukturellen Eigenschaft oder Eigenschaften durch Transvision gewährleistet.

35. Verfahren zur Sicherung von sensiblen Informationen, das die folgenden Schritte aufweist:
a) einen Schritt des Schützens des direkten Lesens der sensiblen Informationen, der eine digitale Signatur anwendet, die ausgehend von einem materiellen Element erhalten wird, der es ermöglicht, die sensiblen Informationen in geschützter Form zu erhalten,
b) einen Schritt des Lesens der Informationen, die in Schritt a) geschützt werden, in Konformität mit einem der Ansprüche 1 bis 31, der es ermöglicht, die sensiblen Informationen wiederzufinden.

36. Verfahren zur Sicherung nach Anspruch 35, **dadurch gekennzeichnet, dass** der Schritt a) von einem Schritt des Aufzeichnens der sensiblen Informationen in geschützter Form auf einem Datenträger gefolgt wird.

37. Verfahren zur Sicherung nach Anspruch 35 oder 36, **dadurch gekennzeichnet, dass** der Schritt a) des Schützens der sensiblen Informationen in digitaler Form mittels eines kryptographischen Algorithmus durchgeführt wird, wobei die digitale(n) Signatur(en) des materiellen Elements die Rolle von einem kryptographischen Schlüssel (von kryptographischen Schlüsseln) spielen und der Schritt b) des Lesens mit dem Verfahren von Anspruch 20 konform ist.

38. Verfahren zur Sicherung nach einem der Ansprüche 35 oder 36, **dadurch gekennzeichnet, dass** der Schritt a) des Schützens der sensiblen Informationen in digitaler Form mittels eines steganografischen Algorithmus durchgeführt wird, wobei die digitale(n) Signatur(en) des materiellen Elements die Rolle von einem Steganographie-Schlüssel (von Steganographie-Schlüsseln) spielen und der Schritt b) des Lesens mit dem Verfahren von Anspruch 21 konform ist.

39. Verfahren nach Anspruch 35 oder 36, **dadurch gekennzeichnet, dass** das Schützen der sensiblen Informationen in digitaler Form durch Kombination mit mindestens einer digitalen Signatur eines materiellen Elements durchgeführt wird, die gleichzeitig die sensiblen Informationen in digitaler Form und die digitale Signatur, ausgehend von ihrer binären, hexadezimalen, alphabetischen Form oder von der Form im ASCII-Format durch Anwendung in gemeinsamer Form oder nicht der Prinzipien der Permutation, Transposition, Substitution, Iteration, Maske (logische Operatoren einschließlich XOR, Addition, Subtraktion, ein Bit nach dem anderen (Bitkette) oder ein Block nach dem anderen ...) oder mathematischer Eigenschaften der modularen Algebra (Modul n), der Zahlentheorie mindestens teilweise unlesbar macht, und der Schritt b) des Lesens mit dem Verfahren von Anspruch 23 konform ist.

40. Verfahren zur Sicherung nach Anspruch 39, **dadurch gekennzeichnet, dass** die Kombination, die in Schritt a) verwendet wird, durch Anwenden des Prinzips der Einmalverschlüsselung durchgeführt wird und der Schritt b) des Lesens mit dem Verfahren von Anspruch 24 konform ist.

41. Verfahren zur Sicherung nach Anspruch 35 oder 36, **dadurch gekennzeichnet, dass** der Schritt a) des Schützens der sensiblen Informationen in digitaler Form unter Verwendung der digitalen Signatur(en) als "digitalen Umschlag" der sensiblen digitalen Informationen in komprimierter, verschlüsselter und/oder steganographierter Form durchgeführt wird und der Schritt b) des Lesens mit dem Verfahren von Anspruch 25 konform ist.

42. Verfahren zur Sicherung nach einem der Ansprüche 35 bis 41, **dadurch gekennzeichnet, dass** der Schritt a) mindestens eine digitale Signatur verwendet, die ausgehend von mindestens einer strukturellen Eigenschaft eines materiellen Elements unter Berücksichtigung seiner komplexen, chaotischen, einzigartigen und stabilen Struktur erhalten wird, und der Schritt b) des Lesens mit dem Verfahren von Anspruch 4 konform ist.

43. Verfahren zur Sicherung nach einem der Ansprüche 35 bis 42, **dadurch gekennzeichnet, dass** das materielle Element von Schritt a) aus der Gesamtheit oder einem Teil eines Papiers, Kartons oder Vlieses ausgewählt wird, und der Schritt b) des Lesens mit dem Verfahren von Anspruch 7 konform ist.

44. Verfahren zur Sicherung nach Anspruch 43, **dadurch gekennzeichnet, dass** das materielle Element von Schritt a) ein Teil eines Papiers, Kartons oder Vlieses ist, auf dem es durch ein transparentes Material, das langfristig stabil ist und seinen Schutz gewährleistet, beispielsweise eine Kunststoffbeschichtung oder ein Harz, erkannt wird, und der Schritt b) des Lesens mit dem Verfahren von Anspruch 8 konform ist.

45. Verfahren zur Sicherung nach den Ansprüchen 35 bis 44, **dadurch gekennzeichnet, dass** die digitale Signatur des materiellen Elements, das in Schritt a) verwendet wird, durch Erkennen mit Hilfe von einem oder mehreren Sensoren einer oder mehrerer struktureller Eigenschaften dieses Elements, gefolgt von einer Digitalisierung und eventuell begleitet von einer Kodierung nach einem oder mehreren Algorithmen dieser strukturellen Eigenschaft oder Eigenschaften erhalten wird, und der Schritt b) des Lesens mit dem Verfahren von Anspruch 14 konform ist.

46. Verfahren zur Sicherung nach Anspruch 45, **dadurch gekennzeichnet, dass** die strukturelle(n) Eigenschaft(en), die in Schritt a) verwendet wird (werden), ihre komplexe, chaotische, einzigartige und stabile Struktur berücksichtigt (berücksichtigen), und der Schritt b) des Lesens mit dem Verfahren von Anspruch 15 konform ist.

47. Verfahren zur Sicherung nach Anspruch 45 oder 46, **dadurch gekennzeichnet, dass** das Erkennen in Schritt a) dank eines optischen oder elektronischen Sensors nach Anwenden einer elektromagnetischen Welle oder einer elektromagnetischen Strahlung auf das materielle Element durchgeführt wird, und der Schritt b) des Lesens mit dem Verfahren von Anspruch 16 konform ist.

48. Verfahren zur Sicherung nach Anspruch 45 oder 46, **dadurch gekennzeichnet, dass** das Erkennen in Schritt a) dank eines Sensors mit Kontakt durchgeführt wird, wobei das materielle Element als Träger einer Ultraschallwelle oder einer elektrischen, thermischen, chemischen, biologischen Beanspruchung dient, wobei das Verhalten/die Antwort des materiellen Elements, das dieser Welle oder Beanspruchung unterworfen wird, in verschiedenen Ausrichtungen aufgezeichnet wird, und der Schritt b) des Lesens mit dem Verfahren von Anspruch 17 konform ist.

49. Verfahren zur Sicherung nach einem der Ansprüche 35 bis 48, **dadurch gekennzeichnet, dass** die digitale Signatur, die in Schritt a) generiert wird, eine binäre Form oder die Form eines Bildes oder mehrerer Bilder in Graustufen aufweist und der Schritt b) des Lesens mit dem Verfahren von Anspruch 18 konform ist.

50. Verfahren zur Sicherung nach einem der Ansprüche 35 bis 49, **dadurch gekennzeichnet, dass** es die digitale Signatur, die in Schritt a) generiert wird, eines materiellen Elements, Teil eines Papiers, Kartons oder Vlieses, die nach dem Erfassen seiner Wechselwirkung mit dem Licht, das durch Transmission sichtbar ist, unter Verwendung eines CCD- oder CMOS-Sensors anwendet, und der Schritt b) des Lesens mit dem Verfahren von Anspruch 19 konform ist.

51. Verfahren zur Sicherung nach einem der Ansprüche 35 bis 50, **dadurch gekennzeichnet, dass** die strukturelle Eigenschaft oder die strukturellen Eigenschaften, die in Schritt a) verwendet werden, digitalisiert und dann zeitlich abgetastet werden, und der Schritt b) des Lesens mit dem Verfahren von Anspruch 26 konform ist.

52. Verfahren zur Sicherung nach einem der Ansprüche 35 bis 51, **dadurch gekennzeichnet, dass** die sensiblen Informationen dynamisch sind, wie eine Tonfolge und/oder Videosequenz, und der Schritt b) des Lesens mit dem Verfahren von Anspruch 27 konform ist.

53. Verfahren zur Sicherung nach Anspruch 52, **dadurch gekennzeichnet, dass** das Schützen von Schritt a) mittels einer dynamischen digitalen Signatur, die durch Wiederholen einer statischen digitalen Signatur oder durch wiederholtes Erkennen mit Hilfe von einem oder mehreren Sensoren einer oder mehrerer struktureller Eigenschaften eines statischen materiellen Elements erhalten wird, in Konformität mit Anspruch 28 durchgeführt wird.

54. Verfahren zur Sicherung nach Anspruch 53, **dadurch gekennzeichnet, dass** das Schützen von Schritt a) mittels einer dynamischen digitalen Signatur, die durch kontinuierliches Erkennen mit Hilfe von einem oder mehreren Sensoren einer oder mehrerer struktureller Eigenschaften eines materiellen Elements, das sich relativ zu dem (den) Sensor(en) in Bewegung befindet, erhalten wird, in Konformität mit Anspruch 29 durchgeführt wird.

55. Verfahren zur Sicherung nach Anspruch 54, **dadurch gekennzeichnet, dass** das materielle Element eine laufende Papier-, Karton- oder Vliesrolle oder Papier bei der Herstellung auf einer Papiermaschine in Konformität mit Anspruch 30 ist.

56. Verfahren zur Sicherung nach einem der Ansprüche 35 bis 55, **dadurch gekennzeichnet, dass** das Schützen von Schritt a) mehrere digitale Signaturen eines gleichen oder verschiedener materieller Elemente in Konformität mit Anspruch 31 anwendet, was später ermöglicht, partielle und/oder getrennte Lesezugänge zu den sensiblen Informationen zu geben.

## Claims

1. Method for reading protected sensitive data **characterised in that** the reading is performed by subjecting the protected sensitive data in digital form to a digital processing which implements one or several digital signatures obtained from at least one structural characteristic of a material element chosen from among all or part of a fibrous material, plastic, metal, leather, wood, composite material, glass, mineral, crystalline structure, the one or several digital signatures being used as reading key.

2. Method for reading protected sensitive data set forth in claim 1 **characterised in that** the protection of the sensitive data implemented the sensitive data in digital form and at least one digital signature obtained from at least one structural characteristic of a material element chosen from among all or part of a fibrous material, plastic, metal, leather, wood, composite material, glass, mineral, crystalline structure, and **in that** the reading is performed by subjecting the protected sensitive data in digital form to a digital process inverse to that used to protect it and which implements one or several digital signatures of the material element regenerated during reading.

3. Method for reading protected sensitive data set forth in claim 1 **characterised in that** the protection of the sensitive data implemented the sensitive data in digital form and at least one digital signature obtained from at least one structural characteristic of a material element chosen from among all or part of a fibrous material, plastic, metal, leather, wood, composite material, glass, mineral, crystalline structure, and **in that** the reading is performed by subjecting the protected sensitive data in digital form to a digital process inverse to that used to protect it and which implements one or several digital signatures of the material element that was used to protect it.

4. Method for reading protected sensitive data set forth in claim 1 to 3 **characterised in that** it implements at least a digital signature obtained from at least one structural characteristic of a material element reflecting its complex, chaotic, unique and stable structure.

5. Method set forth in claim 1 to 4 **characterised in that** the digital signature(s) is (are) random.

6. Method set forth in claim 5 **characterised in that** the digital signature(s) present(s) a complex and chaotic character that mirrors the structure of the material from which they are extracted.

7. Method set forth in one of claims 1 to 6 **characterised in that** the material element is chosen from all or part of a paper, cardboard or nonwoven.

8. Method set forth in claim 7 **characterised in that** the maternal element is part of a paper, cardboard or nonwoven, on to which it is marked out by a transparent material, stable with time and ensuring its protection, for example, a plastic or resin coating.

9. Method set forth in one of claims 3 to 8 **characterised in that** the digital signature(s) used during the reading correspond to those used during the protecting.

10. Method set forth in claim 9 **characterised in that** the digital structural characteristic(s) and/or digital signature(s) implemented during the protecting are backed up in a permanent and safe manner, whereas the material element is destroyed, and are used for the reading.

11. Method set forth in one of claims 3 to 8 **characterised in that** the digital signature(s) used during the reading are subjected to check keys, error correcting codes or a statistical dependence test.

12. Method set forth in one of claims 1 to 11 **characterised in that**, if its implementation authorises the successful reading of the sensitive data, it also validates the authentic nature of the digital signature(s) used and/or the material element from which it issues.

13. Method set forth in one of claims 1 to 12 **characterised in that** it comprises an additional phase which compares the read data with the sensitive data known to the user, hallowing to validate the authentic nature of the digital signature(s) implemented of the material element from which it issues and of the sensitive data.

14. Method set forth in one of claims 1 to 13 **characterised in that** the digital signature is obtained via detection, using one or several sensors, of one or several structural characteristics of this element, followed by a digitisation and possibly accompanied by an encoding according to one or several algorithms of this or these structural characteristics.

15. Method set forth in claim 14 **characterised in that** the structural characteristic(s) reflect the complex, chaotic, unique and stable structure of the material element.

16. Method set forth in claim 14 or 15 **characterised in that** the detection is performed thanks to an optical or electronic sensor, after applying to the material element a wave or electromagnetic radiation.

17. Method set forth in claim 14 or 15 **characterised in that** the detection is performed thanks to a contact sensor, the material element acting as a media for an ultrasonic wave, or an electric, thermal, chemical, biological type stress, the behaviour/response from the material element subjected to this wave or stress being recorded in different orientations.

18. Method set forth in one of claims 1 to 17 **characterised in that** the digital signature is in a binary form or in the form of a real or complex image or several images in shades of grey.

19. Method set forth in one of claims 1 to 18 **characterised in that** it implements the digital signature of a material element, issued from paper, cardboard or nonwoven, obtained after detection of its interactivity with visible light, via look through, by using a CCD or CMOS sensor.

20. Method set forth in one of claims 1 to 19 **characterised in that** the reading uses one or several cryptographic al.gorithms, the digital signature (s) acting as decryption keys.

21. Method set forth in one of claims 2 to 18 **characterised in that** the protecting of the sensitive data in digital form is performed by means of a steganographic algorithm, the digital signature (s) of the material element playing the role of steganographic keys.

22. Method set forth in one of claims 2 to 18 **characterised in that** the protecting of the sensitive data in digital form is performed by combining it with at least one digital signatures of a material element, rendering at least partially illegibly both the sensitive data in digital form and the digital signature.

23. Method set forth in claim 22 **characterised in that** the combination is made from the binary, hexadecimal, ASCII or alphabetic form of the sensitive data in digital form and of the digital signature (s) of the material element, by jointly or singly applying the principles of permutation, transposition, substitution, iteration, mask (logical operators including XOR, addiction, subtraction, bit by bit (in sequence) or block by block...) or mathematical properties of modular algebra (modulo n) and of numbers theory.

24. Method set forth in claim 22 **characterised in that** the combination was made by applying the disposable mask principle.

25. Method set forth in one of claims 2 to 18 **characterised in that** the protecting of the sensitive data in digital form was performed using the digital signature(s) as "digital envelopes" of the sensitive digital data in compressed, cyphered and/or steganographed form.

26. Method set forth in one of claims 1 to 15 **characterised in that** the structural characteristic(s) arse digitised, then sampled with time.

27. Method set forth in one of claims 1 to 25 **characterised in that** the sensitive data are dynamic, such as an audio and/or video sequence.

28. Method set forth in claim 27 **characterised in that** the protection is performed by means of a dynamic digital signature obtained by repeating a static digital signature or by repeated detection, through the use of one or several sensors, of one or several structural characteristics of a static material element.

29. Method set forth in claim 27 **characterised in that** the protection is performed by means of a dynamic digital signature obtained via continuous detection, through the use of one or several sensors, of one or several structural characteristics of a material element in relative movement to the sensor(s).

30. Method set forth in claim 29 **characterised in that** the material element is a reel of paper, cardboard or nonwoven, in movement, or paper being manufactured on a paper machine.

31. Method set forth in one of claims 2 to 30 **characterised in that** the protection implements several digital signatures from the same or from different material elements, and **in that** the reading uses one or several digital signatures of one or several material elements, authorising distinct access levels to some parts of the sensitive data.

32. Device used to implement the method for reading set forth in one of claims 1 to 31, **characterised in that** it comprises means for finding a material element selected and detected on the latter, one or several of its structural characteristics, notably reflecting its complex, chaotic, unique and stable structure, connected to a storing and processing unit ensuring:
a2) the digitising and possibly the coding according to one or several algorithmes of the structural characteristic(s) detected to generate one or several of the digital signatures,
b2) the reading of the sensitive data protected by implementing a digital process which uses the digital signature(s) generated in stage a2, as reading key(s), and which corresponds to the digital process noticeably inverse to that used to associate the digital signature(s) with the original sensitive data, whilst being protected.

33. Device set forth in claim 32, **characterised in that** an optical sensor is used to detect the structural characteristic(s) of the material element.

34. Device set forth in one of claims 32 or 33, **characterised in that** the optical sensor is a CCD or CMOS sensor ensuring the detection of the structural characteristic(s) via look through.

35. Method for securing sensitive data comprising the following steps:
a) a step of protecting the direct reading of sensitive data implementing a digital signature obtained from a material element, in order to obtain protected sensitive data;
b) a step of reading the protected sensitive data obtained in step a), according to any one of claims 1 to 31, allowing to find the sensitive data.

36. Method for securing set forth in claim 35 **characterised in that** the step a) is followed by a step of storing sensitive data under protected form on a data media.

37. Method for protecting, according to claim 35 or 36 **characterised in that** the step a) of protecting of the sensitive data in digital form is performed by means of a cryptographic algorithm, the digital signature(s) of the material element playing the role of cryptographic key(s) and step b) of reading is conform to method of claim 20.

38. Method for protecting according to claim 35 or 36, **characterised in that** the step a) of protecting the sensitive data in digital form is performed by means of a steganographic algorithm, the digital signature(s) of the material element playing the role of steganographic key(s) and step b) of reading is conform to method of claim 21.

39. Method for protecting according to claim 35 or 36, **characterised in that** the protecting of the sensitive data in digital form is performed by combining at least one digital signature of a material element, rendering at least partially illegible both the sensitive data in digital form and the digital signature, from their binary, hexadecimal, ASCII or alphabetic form, by jointly or singly applying the principles of permutation, transposition, substitution, iteration, mask (logical operators including XOR, addition, subtraction, bit by bit (in sequence) or block by block...) or mathematical properties of modular algebra (modulo n) and of numbers theory and step b) of reading is conform to method of claim 23.

40. Method for protecting set forth in claim 39 **characterised in that** the combination used at step a) was made by applying the disposable mask principle and step b) of reading is conform to method of claim 24.

41. Method for protecting according to claim 35 or 36, **characterised in that** the step a) of the protecting of the sensitive data in digital form was performed by using the digital signature(s) as "digital envelopes" of the sensitive digital data in compressed, cyphered and/or steganographed form, and step b) of reading is conform to method of claim 25.

42. Method for protecting set forth in one of claims 35 to 41 **characterised in that** step a) implements at least one digital signature obtained from at least one structural characteristic of a material element reflecting its complex, chaotic, unique and stable structure, and step b) of reading is conform to method of claim 4.

43. Method for protecting set forth in one of claims 35 to 42 **characterised in that** the material element of step a) is chosen from part or all of a paper, cardboard or nonwoven, and step b) of reading is conform to method of claim 7.

44. Method for protecting set forth in claim 43 **characterised in that** the material element of step a) is part of a paper, cardboard or nonwoven, on to which it is marked out by a transparent maternal, stable with time and ensuring its protection, for example, a plastic or resin coasting and step b) is conform to method of claim 8.

45. Method for protecting set forth in one of claims 35 to 44 **characterised in that** the digital signature of the material element used at step a) is obtained via detection, using one or several sensors, of one or several structural characteristics of this element, followed by a digitisation and possibly accompanies by an encoding according to one or several algorithmes of this or these structural characteristics and step b) of reading is conform to method of claim 14.

46. Method for protecting set forth in claim 45 **characterised in that** the structural characteristic(s) used at step a) reflect(s) its complex, chaotic, unique and stable structure, and step b) of reading is conform to method of claim 15.

47. Method for protesting set forth in claim 46 or 47 **characterised in that** the detection is performed at step a) thanks to an optical or electronic sensor, after applying to the material element a wave or electromagnetic radiation and step b) of reading is conform to method of claim 16.

48. Method for protecting set forth in claim 45 or 46 **characterised in that** the detection is performed at step a) thanks to contact sensor, the material element acting as a media for an ultrasonic wave, or an electric, thermal, chemical, biological type stress, the behaviour/response from the material element subjected to this wave or stress being recorded in different orientations and step b) of reading is conform to method of claim 17.

49. Method for protecting set forth in one of claims 35 to 48 **characterised in that** the digital signature generated at step a) is in a binary form or in the form of an image or several images in shades of grey, and step b) of reading is conform to method of claim 18.

50. Method for protecting set forth in one of claims 35 to 49 **characterised in that** it implements the digital signature generated at step a) of a material element, issued from paper, cardboard or nonwoven, obtained dafter detection of its interactivity with visible light, via look through, by using a CCD or CMOS sensor and step b) is conform to method of claim 19.

51. Method for protecting set forth in one of claims 35 to 50 **characterised in that** the structural characteristics used at step a) are digitised, then sampled in time and step b) of reading is conform to method of claim 26.

52. Method for protecting set forth in one of claims 35 to 51 **characterised in that** the sensitive data is dynamic, such as an audio and/or video sequence and step b) of reading is conform to method of claim 27.

53. Method for protecting set forth in claim 52 **characterised in that** the protection of step a) is performed by means of a dynamic digital signature obtained by repeating a static digital signature or by repeated detection, through the use of one or several sensors, of one or several structural characteristics of a static maternal element, according to claim 28.

54. Method for protecting set forth in claim 53 **characterised in that** the protection of step a) is performed by means of a dynamic digital signature obtained via continuous detection, through the use of one or several sensors, of one or several structural characteristics of a material element in relative movement to the sensor(s), according to claim 29.

55. Method for protecting set forth in claim 54 **characterised in that** the material element is a reel of paper, cardboard or nonwoven, in movement, or paper being manufactured on a paper machine, according to claim 30.

56. Method for protecting set forth in one of claims 35 to 55 **characterised in that** the protection of step a) implements several digital signatures from the same or from different material elements, latter providing partial and/or distinct reading access to the sensitive data, according to claim 31.
